# EUROPEAN PATENT SPECIFICATION

(11) **EP 0 232 551 B1**
(45) Date of publication and mention of the grant of the patent: **18.11.1993**
(21) Application number: 86118124.6
(22) Date of filing: 30.12.1986
(51) Int. Cl.: C07F 7/08, C07F 7/14

(54) **Novel process for promoting hydrosilation reactions using a second hydrosilane**
Verfahren zur Beförderung von Hydrosilierungsreaktionen durch Verwendung eines zweiten Hydrosilans
Procédé pour la promotion de réactions d'hydrosilation en utilisant une deuxième hydrosilane

(30) Priority: 31.12.1985 US 815007
(43) Date of publication of application: 19.08.1987
(73) Proprietor: UNION CARBIDE CORPORATION, Danbury Connecticut 06817 (US)
(72) Inventor: Schilling, Curtis Louis, Jr., Croton-on-the-Hudson New York 10520 (US)
(74) Representative: Freiherr von Pechmann, Eckehart, Dr. Dipl.-Chem.

(56) References cited:
- US-A- 2 823 218
- CHEMICAL ABSTRACTS, vol. 106, no. 7, 16th February 1987, page 865, abstract no. 50441x, Columbus, Ohio, US; & CS-A-228 449 (M. CAPKA et al.) 15-07-1986
- Ponomarenko et al, Izv. Akad. Nauk SSSR, Otdel. Khim Nauk. No.9, pp. 1610-1618 (1980); Engl. trans. in Bull. Acad. Sci. USSR, Chem. Sci. pp. 1496-1503, (1960)
- Pomarenko et al, Dokl. Akad. Nauk., SSSR, 121, 307 (1958); Engl. trans. in Proc. Acad. Sci. USSR, 121, 541-544 (1958)
- Ponomarenko et al, Dokl. Akad. Nauk., SSSR, 124, 838 (1959); Engl. trans. in Proc. Acad. Sci. USSR; 124, 95-98 (1959)
- Bailey et al, Remarks at the 137th Meeting of the American Chemical Society, April 5-14, 1960
- Benkeser et al, Journal of Organomet. Chem., 184, (1980); C3-C9

## Description

This invention relates to processes for improving rates and yields in hydrosilation reactions, those being addition reactions of compounds containing hydrosilyl groups. i.e., ≡SiH groups, to unsaturated compounds to form carbon-functional silicon compounds. In particular. the present invention relates to the use of a hydrosilyl compound as a promoter in these hydrosilation reactions.

The hydrosilation reaction was discovered in 1947 and is now one of the best known and most widely practiced reactions in organosilicon chemistry, including use in a wide variety of large scale commercial applications. This reaction has been the subject of several extensive reviews. l C. Earborn & R. W. Bott, Organometillic Compounds of the Group IV Elements (1968); E. Lukevics & M. G. Voronkov, Organic Insertion Reactions of Group IV Elements (1966).

A number of patents In the art have shown that platinum compounds can have important catalytic effects in these reactions.

U.S. - A - 2,632,013 for example, is an early patent showing that various forms or compounds of platinum can be effective catalysts for hydrosilation reactions. U.S. -A- 2,823,218 showed that chloroplatinic acid, a soluble form of platinum, was a particularly effective catalyst. A variety of additives to or derivatives of chloroplatinic acid have been claimed as offering some advantage over chloroplatinic acid, H₂PtCl₆. None of these patents teaches the use of a second hydrosilyl compound used in combination with the soluble platinum catalyst to promote the rate or yields of the first reaction.

Of the many hydrosilation reactions taught in the prior art, very few involve the hydrosilation reactions between two different hydrosilyl compounds and one unsaturated compound. Moreover, that art which does discuss this area focuses on the competitive reactivity order of the hydrosilyl compounds with regard to the unsaturated compound. That is, the art teaches which of the two hydrosilyl compounds reacts better with a third unsaturated one; there is no teaching of the positive effect one such hydrosilyl compound might have on the other in increasing the yield of the hydrosilation reaction product, i.e., the product of the reaction between the hydrosilyl reactant and the unsaturated compound, or in decreasing the reaction time in the formation of such product.

For example, work by Bailey, D. L. Bailey, remarks at the 137th National Meeting of the American Chemical Society (April 5-14, 1960), and by Benkeser, R. A. Benkeser, remarks at the 165th National Meeting of the American Chemical Society (April 8-13, 1973), has established the competitive reactivity order H₃SiCl > H₂SiCl₂ > Cl₃SiH for reactions with alkenes, this being the reverse of the reactivity order these compounds display when they are not competing with one another. The reversal occurs because the compounds, which are more reactive competitively, effectively reduce the reactivity of the other compounds, i.e., they have a negative effect on hydrosilation reactivity. The work done by Bailey did not study and did not note any promotional effects.

Other studies, have also concentrated on the competitive effect among hydrosilyl reactants. Ponomarenko et al in Izv. Akad. Nauk SSSR, Otdel. Khim. Nauk 1610 (1960); Engl. trans. in Bull. Acad. Sci. USSR, Chem. Sci. Section 1496 (1960).

In none of this prior art is there found an example of a second hydrosilyl compound having a positive effect on the reactivity of another hydrosilyl compound. This prior art always shows the two compounds in competition with one another rather than the one promoting the other in a non-competitive hydrosilation reaction.

Ponomarenko et al in Dokl. Akad. Nauk, SSSR, 124, 838 (1959); English translation as Proc. Acad. Sci. USSR, 124, 95 (1959) do note such a positive effect, whereby Cl₃SiH and EtSiHCl₂ increase yields of products from reactions of Et₂MeSiH with allyl ethers (CH₂= CH-CH₂OCF₂CFClH or CH₂=CHCH₂OCF₂CF₂H) using Pt/C (platinum on carbon) catalyst. In these cases, however, high temperatures (164°-198°C) and long reaction times (3 h) were used. These studies also involved the use of insoluble platinum catalysts. The same workers reacted Et₂MeSiH with CH₂=CHCH₂OCF₂CF₂H using H₂PtCl₆ at lower temperature/time (25°C/30 min), but did not use a second hydrosilyl compound in the H₂PtCl₆ - catalyzed reaction. The authors of those Papers specifically commented that no promotional effects were observed in using a second hydrosilyl compound together with chloroplatinc acid in a hydrosilation reaction conducted under mild reaction temperatures (cf. Ponomarenko et al in Izv. Akad. Nauk SSSR, Otdel. Khim. Nauk. No. 9, pp. 1610-1618 (1960); Engl. trans. in Bull. Acad. Sci. USSR, Chem. Sci. Section pp. 1496-1503, (1960), especially page 1496).

There has also been some prior art in which chloroplatinic acid, H₂PtCl₆, has been treated with Cl₃SiH or MeSiHCl₂ to give solutions which served as hydrosilation catalysts. Benkeser, 90 J. Am. Chem. Soc., 1871 (1968). In those studies, however, the same reactant, i.e. Cl₃SiH, was evaluated as both the starting reactant and the promoter. No advantage in either rate or yield was found. Similarly, in studies involving MeSiHCl₂, the MeSiHCl₂ was evaluated as both the starting reactant and promoter, and again no promotional advantages were observed. In U.S. - A - 3,576,027 a catalyst was prepared by treating H₂PtCl₆·6H₂O with Me₂SiHCl in a separate step, which catalyst was then isolated and used to catalyze a reaction of MeSiHCl₂ with l-octene. The catalyst there was formed in a precombination step rather thin being generated in situ. Additionally, large promotional effects were not observed. These tests show once more that it would be quite unexpected to find that a second hydrosilyl compound, used in a hydrosilation reaction at mild temperatures, could actually promote the rates and yields of that reaction.

From CS-A-228 449 there is known the preparation of (3-bromopropyl)-trichlorosilane and (3-bromopropyl)-trichlorosilane and (3-bromopropyl)-methyldichlorosilane by hydrosilation of BrCH₂CH:CH₂ with HSiCl₂ or MeHSiCl₂ in the presence of H₂PtCl₆ (catalyst) and an alkyl-, aryl- or alkoxysilane.

The use of a second hydrosilyl compound and soluble platinum catalysts to promote the large rate and/or yield enhancements disclosed in the present invention under relatively mild temperatures has not been disclosed in the prior art, and is in fact contradicted by the above prior art.

Thus, there is a need in the art for a process which can be applied to hydrosilation reactions, i.e., those between hydrosilyl groups and unsaturated compounds, which process is characterized by relatively mild temperatures and relatively fast rates, by relatively inexpensive catalysts from which the active catalysts of the invention are generated in situ, and by greatly enhanced yields of carbon-functional silicon compounds formed from the hydrosilation reaction.

It is thus an object of this invention to provide a process for improving the yields and rates of hydrosilation reactions under relatively mild conditions using a second hydrosilyl promoter and a relatively inexpensive catalysts, such as soluble platinum catalysts whereby the active catalyst is generated in situ.

This invention relates to a process for greatly improving the reaction rates and yields/selectivities in hydrosilation reactions, i.e., reactions of compounds containing hydrosilyl groups with unsaturated compounds to form carbon-functional silicon compounds: 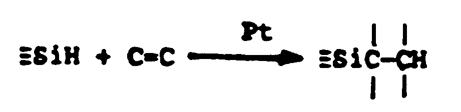
In the process of the invention compounds containing silicon-carbon bonds are prepared by a hydrosilation reaction of (A) a hydrosilyl reactant with (B) an olefinic reactant and (C) a hydrosilyl promoter in the presence of a soluble platinum catalyst at a temperature below 150°C wherein:
(A) the hydrosilyl reactant has the formula:

   R₃SiH

   where R is selected from the group consisting of
   (i) a monovalent hydrocarbon group which is in aliphatic group having 1 to 10 carbon atoms or an aromatic group having 6 to 20 carbon atoms free of terminal unsaturation, possibly substituted with halogen, cyano, carboalkoxy (ester), ether or thioether, with the proviso that when such hydrosilyl reactant is substituted with functional groups, said functional groups do not interfere with the promotion mechanism for hydrosilane-promoted hydrosilations;
   (ii) an alkoxy group;
   (iii) an acyloxy group;
   (iv) a carbomoyloxy group;
   (v) a siloxy group;
   (vi) a halogen or
   (vii) two R groups taken together form a hetero-cyclic ring including the silicon atom;
(B) the olefinic reactant is used at 0.1 to 2.0 molar amounts relative to the hydrosilyl reactant (A);
(C) the hydrosilyl promoter
   is selected from the group consisting of Cl₃SiH, MeSiHCl₂, Me₂SiHCl, Et₃SiH, F₃SiH and Br₃SiH,
   with the proviso that the hydrosilyl promoter and the hydrosilyl reactant may not be the same compound when used in the same reaction,
   the hydrosilyl promoter (C) is used at 0.0001 to 0.1 molar amounts relative to the hydrosilyl reactant (A), and said promoter (C)
   provides (1) at least a 20% increase in the amount of silicon-carbon compounds, or (2) at least a 20% increase in reaction rate relative to an unpromoted reaction of (A) and (B).

The use of the hydrosilyl promoter eliminates the induction period associated with the use of H₂PtCl₆ thus resulting in large rate increases in certain cases. This elimination of the induction period can also make external heating unnecessary and result in large energy savings. The hydrosilyl promoter further results in substantial improvements in product selectivity in certain hydrosilation reactions, thus increasing the commercial utility of such reactions and, in combination with the large reaction rate increases mentioned above, significantly increasing effective production capacity without building additional production facilities.

Finally, an important aspect of the invention is that, in certain cases, the hydrosilyl promoter can be useful at sub-ambient temperatures. This enables some reactions to be run at ambient pressure, obviating the need for pressure-resistant equipment.

Thus the key discovery of the invention is the use of a hydrosilyl promoter in a platinum-catalyzed hydrosilation reaction which surprisingly increases catalytic effectiveness.

Although the degree to which the promotional effects may vary depending on which hydrosilyl reactant, hydrosilyl promoter, platinum compound or unsaturated olefin is selected, the invention is characterized by increases in yield or selectivity of at least 20 percent. The most striking or positive promotion effects, in terms of reaction rate and selectivity, are observed from those reactions in which the electron environment of the hydrosilyl promoter is most nearly opposite the electron environment of the hydrosilyl starting reactant. Further, strong promotional effects are observed in reactions which are normally sluggish, i.e., those which require extended heating or high catalyst levels.

In the process according to the invention the promoter reacts with a soluble platinum catalyst and a starting hydrosilyl reactant to greatly increase the yield, selectivity or rate of the hydrosilation product.

While not wishing to be bound by theory, the active catalyst is believed to be generated when platinum catalysts such as chloroplatinic acid undergo a series of reactions involving both the hydrosilyl reactant and the hydrosilyl promoter to produce a species containing Pt-Si bonds. The following is a possible representation of such reactions involving Cl₃SiH and Et₃SiH as the promoter and reactant, respectively. The Pt-Cl is one such group in a soluble Pt catalyst containing Pt-Cl bonds, such as H₂PtCl₆:

Pt-Cl + Et₃SiH → Et₃SiCl + Pt-H

Pt-H + Cl₃SiH → H₂ + Pt-SiCl₃

It has been reported that Et₃SiH reacts with Pt-Cl bonds as shown, while Cl₃SiH does not. It has also been reported that Cl₃SiH reacts with Pt-H bonds to form H₂ and Pt-SiCl₃ bonds, while Et₃SiH does not undergo such a reaction. It should be noted that these reactions explain the formation of Pt-Si species by established chemistry and that such species need only to be sufficiently stable in solution to act as highly efficient hydrosilation catalysts. Such species, because of their inherently high reactivity, may not be sufficiently stable to allow isolation and identification by normal chemical methods.

The catalysts for the instant invention are platinum compounds used in the form of solutions, such as solutions of H₂PtCl₆ (in hydrated or unhydrated form), solutions of PtCl₄ or PtCl₂, solutions of other soluble Pt compounds such as ethylene bis(platinous chloride), or Pt catalyst solutions as disclosed, for example, in U.S. - A - 3,220,972. Platinum catalysts containing strongly bound stabilizing ligands such as trialkyl or triarylphosphines or acetylacetonate groups are less effective. Phosphines or other strongly bound Pt ligands appear to interfere with the mutual interaction of hydrosilyl promoter and hydrosilyl reactant with the platinum catalyst, preventing or retarding the formation of the active catalyst species of the present invention.

Because of its availability and relatively low cost (for platinum compounds), chloroplatinic acid is the preferred catalyst, although other soluble platinum compounds such as PtCl₄ and ethylene bis(platinous chloride) are considered equally effective.

The platinum solution is added to the reaction in a concentration range of 10⁻³ to 10⁻⁸ molar relative to the combined starting reactant and promoter, preferably 10⁻⁴ to 10⁻⁶ molar.

The olefinic coreactant may be any one of a variety of functional or non-functional terminally unsaturated compounds and has the general formula CH₂=C〈. The following are examples of compounds whose hydrosilation reactions can be promoted via processes of the instant invention:
CH₂=CYCH₂Cl CH₂=CYCH₂OR where
Y=H or R as defined below for hydrosilyl reactant
CH₂=CYCMe₃ CH₂=CYCH₂CHMe₂
CH₂=CYØ CH₂=CYCH₂OAc
CH₂=CYOAc CH₂=CYCH₂O₂CCY=CH₂
CH₂=CYCH₂O₂CY CH₂=CYO₂CY
CH₂=CHCHYCl CH₂=CYCH₂CN
Thus included are allyl and methallyl compounds, vinyl compounds, terminal alkenes, including halides, ethers, esters and nitriles with the proviso that when the olefinic reactant is substituted to functional groups, the functional groups do not interfere with the promotion mechanism of the hydrosilation reaction. The allyl and methallyl compounds include the allyl and methallyl polyalkylene oxide ethers typical of those used commercially to prepare silicone-polyether copolymers.

The olefinic coreactant is preferably used at 0.5-1.5 and most preferably 0.8-1.2 molar amounts relative to the hydrosilyl reactant.

Illustrative hydrosilyl reactants include hydrosilanes such as triethylsilane, a hydrochlorosilane such as Cl₃SiH, a hydrosiloxane such as (ME₃SiO)₂SiMeH, or a polyhydrosiloxane containing hydrosilyl groups at either internal or terminal positions, or both.

The following represent hydrosilyl reactants of the hydrosilane type whose hydrosilation reactions may be promoted with a hydrosilyl promoter:

| | | | |
|---|---|---|---|
| Me₃SiH | MeEt₂SiH | Me₂EtSiH | Et₃SiH |
| Pr₃SiH | Ø₃SiH | Ø₂MeSiH | ØSiMe₂H |

Illustrative of the hydrosiloxanes are the following:
(Me₃SiO)₂SiMeH, 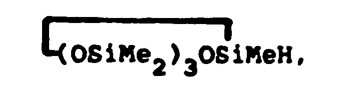
(Me₃O)₃SiH Me₃Si(OSiMe₂)ₓ(OSiMeH)_{y}SiMe₃, x = 0-300, y = 1-300 HSiMe₂(OSiMe₂)ₓOSiMe₂H, MeSi[(OSiMe₂)ₓOSiMe₂H]₃ HSiMe₂(OSiMe₂)ₓ(OSiMeH)_{y}OSiMe₂H, Me₃SiOSiMe₂H 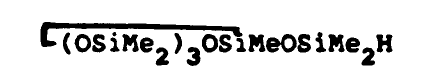
where Me groups can be replaced by functional groups free of terminal unsaturation and which do not otherwise interfere with the promotion mechanism, such as haloalkyl, cyanoalkyl, phenylalkyl and acyloxyalkyl.

Other hydrosilyl reactants include halosilanes, hydroalkoxysilanes and hydroacyloxysilanes, of which the following are representative:
Cl₃SiH F₃SiH Br₃SiH MeSiHCl₂
Me₂SiHCl MeSiHF₂ Me₂SiFH MeSiHBr₂
Me₂SiHBr Me(MeO)₂SiH (MeO)₃SiH
Me(MeCO₂)₂SiH (EtO)₃SiH
In another embodiment of the invention, two R-groups taken together may form a hetero-cyclic ring including the silicon atom, as in 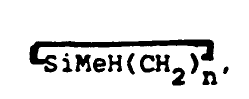
where n = 3-6.

The structure of the hydrosilyl reactant may thus vary widely including to the structures shown above, which merely exemplify some of the possibilities.

The most effective promotion effects are observed when the hydrosilyl reactant and the hydrosilyl promoter differ substantially in structure, or in the electronic environment of the respective ≡SiH groups.

The hydrosilyl promoter can be used in a wide range of concentrations relative to the hydrosilyl reactant or the olefinic or unsaturated coreactant. The hydrosilyl promoter is used at 0.0001-0.1 molar amounts relative to the hydrosilyl reactant. The greatest advantages from a commercial standpoint are attained when very low concentrations of hydrosilyl promoter are effective. In most cases, even with small amounts of promoter, it can simply be added to the hydrosilyl reactant and the platinum catalyst.

While the reactants, catalyst, and promoter can generally be combined in total and allowed to react, there are specific cases in which it is advantageous to vary the order of combination of either reactant, or the promoter, or combinations thereof, to obtain maximum degree of promotion. For example, promotion of the reaction between Et₃SiH and allyl chloride by Cl₃SiH appears to be optimum when a 10/1 molar mixture of allyl chloride/Cl₃SiH is added to Et₃SiH containing the chloroplatinic acid.

The reaction process of this invention may reach a reaction temperature as high as 150°C, although temperatures below 100°C are preferred. The reaction can also be promoted at sub-ambient temperatures.

The reaction can be run under a pressurized atmosphere as high as 10 bar in pressure. Alternatively, if, for example, the reaction is run at sub-ambient temperatures, the reaction can be run at ambient pressures.

Finally, the reaction may be run in time periods ranging from minutes to hours in duration, preferably 3-1000 minutes, more preferably 5-300 minutes and most preferably 10-100 minutes.

Not all reactions between hydrosilyl reactants and unsaturated compounds are promoted by all hydrosilane promoters. Within the almost infinite number of possible combinations of hydrosilane reactants, unsaturated reactants, and hydrosilane promoters, and the possible variations in reaction conditions, i.e., temperature, sequence of combination, and relative concentrations, under which these three components can be reacted, there will be combinations for which promotion effects are not observed. A greater element of predictability, however, can be found by controlling certain variables. The most effective promotion effects, for example, are observed when the hydrosilyl reactant and the hydrosilyl promoter differ substantially in structure, or in electronic environment of the respective ≡SiH groups. For example, Cl₃SiH. which has strong electron attracting halogen groups, is an effective promoter for hydrosilation reactions of trialkylsilanes, such as Et₃SiH. Conversely, Et₃SiH is an effective promoter for hydrosilation reactions of Cl₃SiH.

The conditions and variables for optimal promotional effect can be readily ascertained to one skilled in the art from the disclosure and examples herein. The reactions encompassed within the present invention are characterized by increases in either rate or selectivity of at least 20%.

### EXAMPLES

The following specific examples and procedures are presented to illustrate the invention.The examples representing this invention are numbered; those examples that are lettered are comparative examples which do not illustrate the invention. Only those examples which satisfied the requirements of 20% yield or reaction rate improvement were numbered.

Reported yields are in molar percentages and, in most examples, are given only for the desired hydrosilation product. Other by-products are obtained in many of the examples; their yields are not reported herein.

In the examples and throughout the specification, all percentages and parts are on a molar basis unless specified otherwise.

### Definitions

- EqM: Equ
- Ac: -COCH₃
- Me: methyl
- Et: ethyl
- D₃D': heptamethylcyclotetrasiloxane: 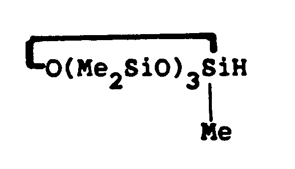 or the corresponding derivative 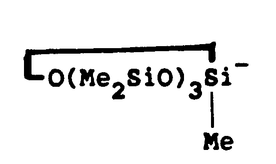
- MD'M: heptamethyltrisiloxane: 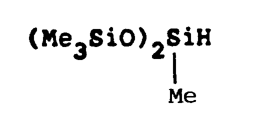 or the corresponding derivative:

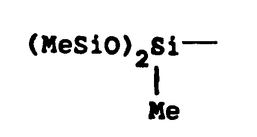

All the reactions above were run in standard laboratory glassware or flasks of various sizes as noted in each example using magnetic stirring under nitrogen atmosphere with heat being applied by electric mantles. Flasks were also fitted with Hopkins condensers and thermometers, temperatures being recorded in Centigrade. All reaction products were identified by vapor phase chromatography (VPC) and nuclear magnetic resonance (NMR) spectroscopy. Reported yields were based on the amount of hydrosiloxane or hydrosilane charged.

### Comparative Example A

Reaction of D₃D' with methallyl chloride; reactants combined at start.

In a 200 ml apparatus, there were combined 56.4g (0.2 mol) of D₃D', 20.0g (0.22 mol) of methallyl chloride, and 0.2 ml of a reduced platinum catalyst (prepared according to Example 1, U.S. - A - 3,220,972). Heat was applied to about 80°C when an exothermic reaction occurred to a maximum temperature of 141°C. Reaction was complete after 1 h, 17 min and was followed by cooling. The reaction mixture was suction filtered into a 100 ml flask which was fitted for vacuum distillation. The following products were isolated:

| Product | Boiling Point/Pressure | g | Yield |
|---|---|---|---|
| D₃D'Cl | 76°/22.6 mbar (aspirator) | 17.0 | 27.0% |
| D₃D'CH₂C(CH₃) = CH₂ | 80°/22.6 mbar (aspirator) | 3.0 | 4.4% |
| D₃D'CH₂CH(CH₃)₂ | 80°/22.6 mbar (aspirator) | 1.6 | 2.4% |
| D₃D'CH₂CH(CH₃)CH₂Cl* | 60°/0.33 mbar | 44.8 | 60.0% |
| Heavies | | 1.2 | -- |

| | | | |
|---|---|---|---|
| * The yield of the desired hydrosilation product by this route was 60.0% | | | |

### Comparative Example B

Reaction of equimolar mixture ofD₃D'/MD'M with methallyl chloride.

In a 100 ml apparatus, there were combined 30.5g (0.1 mol) of 92% D₃D', 22.2g (0.1 mol) of MD'M, and 9.1g (0.1 mol) of methallyl chloride, followed by 0.05 mol of Pt catalyst solution. Heat was applied to 100°C over 152 min, when an exothermic reaction occurred to 130°C. Vacuum distillation of the complete reaction yielded 4.26g (13.6%) of M₂D'CH₂CHMeCH₂Cl and 21.37g (57.4%) of D₃D'CH₂CHMeCH₂Cl. This example shows that neither D₃D' nor MD'M is an effective promoter for reaction of the other with methallyl chloride at the equimolar level.

### Comparative Example C

Reaction of D₃D' with methallyl chloride; olefin added to hydrosiloxane.

In a 500 ml apparatus were placed 282g (1.0 mol) of D₃D' which was heated to 85°C., followed by addition of 0.3 ml of a solution of 4.0 wt.% of H₂PtCl₆·6H₂O in 1,2-dimethoxyethane.
Dropwise addition of 90.5g (1.0 mol) of methallyl chloride was begun and continued at a rate which maintained the reaction temperature at 87°-93°C. Addition was complete in 1.5 hr., and the reaction mixture was distilled directly, yielding the following products:

| Product | Boiling Point/Pressure | g | Yield |
|---|---|---|---|
| D₃D'Cl | 77°/22.6 mbar (aspirator) | 55.0 | 17.4% |
| D₃D'CH₂C(CH₃) = CH₂ | 31°/0.27 mbar | trace | --- |
| D₃D'CH₂CH(CH₃)₂ | 31°/0.27 bar | 30.5 | 9.0% |
| D₃D'CH₂CH(CH₃)CH₂Cl* | 55°/0.16 mbar | 246.2 | 66.1% |
| Heavies | ----- | 11.0 | --- |

| | | | |
|---|---|---|---|
| * The yield of the desired hydrosilation product was 66.1%, a relative improvement of 10.2% over the 60.0% obtained in Comparative Example A. | | | |

### Example 1

Reaction of equimolar mixture of D₃D'/Cl₃SiH with methallyl chloride.

In a 50 ml apparatus there were combined 24.7g (0.085 mol) of D₃D', 11.4g (0.085 mol) of Cl₃SiH, and 7.7g (0.085 mol) of methallyl chloride. Pt catalyst solution (0.05 ml) was added at 20°C causing a gentle exothermic reaction to 78°C in 10 min. Reaction was complete in 15 min. The yield of D₃D'CH₂CHMeCH₂Cl as analyzed by VPC was greater than 90%, a substantial improvement over the yields of Comparative Examples A, B or C, and a demonstration of non-competitive promotion by Cl₃SiH of hydrosiloxane reactivity.

### Example 2

Reaction of D₃D' with methallyl chloride promoted by 9 mol-% Cl₃SiH.

In the apparatus of Example 3, there were combined 30.5g of 92% D₃D' (8% D₄, 0.1 mol of D₃D'), 9.1 g (0.1 mol) of methallyl chloride, and 0.5g Cl₃SiH. Pt catalyst solution (0.05 ml) was added at 20°C; after 42 min temperature was 29°C and 0.7g additional Cl₃SiH was added. Reaction temperature rose gradually to 107°C over 87 min, when reaction was complete. Vacuum distillation yielded 32.85g (88.2%) of D₃D'CH₂CHMeCH₂Cl, the yield being similar to that of Example 1 which employed a much larger amount of Cl₃SiH promoter.

### Example 3

Reaction of D₃D' with methallyl chloride promoted by 11 mol-% Cl₃SiH at 50°C.

The reaction of Example 2 was repeated except that 1.5g Cl₃SiH was added at the start and the reaction mixture was heated to 50°C prior to addition of Pt catalyst. There was a rapid exothermic reaction to 148.5°C in 7 min at which point the reaction was complete, yielding 28.49g (76.5%) of D₃D'CH₂CHMeCH₂Cl on distillation. The lower yield relative to Examples 1 and 2, and the higher amount of non-volatile products (11.5% of total) indicate little advantage to adding catalyst at the higher temperature.

### Example 4

Reaction of equimolar mixture of D₃D'/MeSiHCl₂ with methallyl chloride.

In a 50 ml apparatus, there were combined 9.7g (0.085 mol) of MeSiHCl₂, 24.2g (0.085 mol) of D₃D', and 7.8g (0.085 mol) of methallyl chloride. Pt catalyst solution (0.05 ml) was added at 20°C. Heat was applied intermittently causing an exothermic reaction to 75°C after 26 min. Reaction was complete after 40 min, and was vacuum distilled. yielding 23.8g (76.1%) of D₃D'CH₂CHMeCH₂Cl. This example shows that MeSiHCl₂ is slightly less effective than Cl₃SiH as a promoter for the reaction of D₃D' with methallyl chloride.

### Comparative Example D

Reaction of equimolar mixtures of D₃D'/Et₃SiH with methallyl chloride.

In a 100 ml apparatus, there were combined 28.4g (0.1 mol) of 98% D₃D', 11.6g (0.1 mol) of Et₃SiH, and 9.1g (0.1 mol) of methallyl chloride. Pt catalyst solution (0.05 ml was added at 21°C. Heat was applied to 99°C over 108 min, when a later exothermic reaction to 118°C occurred. Reaction was complete and was vacuum distilled, yielding 24.3g (65.2%) of D₃D'CH₂CHMeCH₂Cl. This example shows that Et₃SiH is much less effective than Cl₃SiH or MeSiHCl₂ as a promoter for the reaction of D₃D' with methallyl chloride when used at the equimolar level.

### Comparative Example E

Reaction of D₃D' with methallyl chloride promoted by 10 mol-% MeSiCl₃.

In a 50 ml apparatus, there were combined 30.5g (0.1 mol) of 92% D₃D', 9.1g (0.1 mol) of methallyl chloride, and 1.5g (0.01 mol) of MeSiCl₃. Pt catalyst solution (0.05 ml) was added at 21°C. Heat was applied to 89°C over 41 min followed by a gentle exothermic reaction to 123.5°C. Reaction was complete in 45 min, and was vacuum distilled, yielding 26.6g (71.4%) of D₃D'CH₂CHMeCH₂Cl. This example shows that MeSiCl₃ is not as effective as either Cl₃SiH or MeSiHCl₂ in promoting the reaction of D₃D' with methallyl chloride, although it did demonstrate a positive effect.

### Comparative Example F

Reaction of equimolar mixture of D₃D'/Me₃SiHCl with methallyl chloride.

In a 100 ml apparatus, there were combined 30.5g (0.1 mol) of 92% D₃D', 9.1g (0.1 mol) of methallyl chloride, and 9.5g (0.1 mol) of Me₂SiHCl. Heat was applied to 43°C and 0.05 ml Pt catalyst solution added, causing an exothermic reaction to 95.5°C in 26 min, with the heat source removed. Vacuum distillation of the complete reaction yielded 7.82g (42.3%) of Me₂SiClCH₂CHMeCH₂Cl and 16.89g (45.3%) of D₃D'CH₂CHMeCH₂Cl. This example shows that neither Me₂SiHCl nor D₃D' is an effective promoter for reaction of the other with methallyl chloride when used at the equimolar level.

**TABLE I**

| PROMOTION OF D₃D' AND METHALLYL CHLORIDE | | | | | |
|---|---|---|---|---|---|
| Example | REACTANT A | OLEFIN | PROMOTER | YIELD % | TIME |
| Comp. A | D₃D' | CH₂=CMeCH₂Cl | -- | 60* | 77 min |
| Comp. B | D₃D' | CH₂=CMeCH₂Cl | EqM. MD'M | 57.4 | 152 min |
| Comp. C | D₃D' | CH₂=CMeCH₂Cl | -- | 66.1 | 90 min |
| 1 | D₃D' | CH₂=CMeCH₂Cl | EqM. Cl₃SiH | >90 | 15 min |
| 2 | D₃D' | CH₂=CMeCH₂Cl | 9 mol-%Cl₃SiH | 88.2** | 87 min |
| 3 | D₃D' | CH₂=CMeCH₂Cl | 11 mol-%Cl₃SiH | 76.5 | 7 min |
| 4 | D₃D' | CH₂=CMeCH₂Cl | EqM. MeSiHCl₂ | 76.1 | 40 min |
| Comp. D | D₃D' | CH₂=CMeCH₂Cl | EqM. Et₃SiH | 65.2 | 108 min |
| Comp. E | D₃D' | CH₂=CMeCH₂Cl | 10 mol-% MeSiCl₃ | 71.4 | 45 min |
| Comp. F | D₃D' | CH₂=CMeCH₂Cl | EqM. Me₂SiHCl | 45.3*** | 26 min |

| | | | | | |
|---|---|---|---|---|---|
| * When Olefin was added to hydrosiloxane in dropwise manner rather than the reactants being combined at the start as in Comparative Example A, the yield was 66.1% (see Comparative Example C). | | | | | |
| ** When mixture was heated to 50°C (versus 20°C) prior to addition of Pt catalyst solution, yield was 76.5% indicating little advantage to adding catalyst at high temperature in this reaction (see Example 3). | | | | | |
| *** Me₂SiHCl competed rather than promoted production with D₃D'. | | | | | |

This table shows that yields and rates of D₃D' can be greatly improved depending on the nature and quantity of the promotor. Example 1 shows the most dramatic increase, relative to an unpromoted reaction, in both yield (greater than 30% absolute) and rate when using equimolar Cl₃SiH. Using a much smaller quantity of Cl₃SiH, i.e., equimolar versus 9 mol-%, gave substantially equivalent yields even though the rate of the reaction was not diminished (compare Example 1 to Example 2). As observed from this table, order of reactivity for greatest yield production is as follows: Cl₃SiH > MeSiHCl₂ > MeSiCl₃ > Et₃SiH Me₂SiHCl.

### Comparative Example G

Reaction of MD'M with methallyl chloride; reactants combined at start.

In the apparatus of Comparative Example A, there were combined 43.1 (0.194 mol) of MD'M, 19.0g (0.21 mol) methallyl chloride, and 0.2 ml of the catalyst used in Comparative Example A. Heat was applied to 94°C. at which point the reaction mixture was refluxing. The reflux temperature increased over 2 h to 143°C. The product mixture was transferred to a 100 ml flask and distilled, yielding the following products:

| Product | Boiling Point/Pressure | g | Yield |
|---|---|---|---|
| Unreacted MD'M | 41°/232.6 mbar (aspirator) | 5.9 | 13.7% |
| M₂D'Cl | 50°/22.6 mbar (aspirator) | 16.5 | 32.2% |
| M₂D'CH₂C(CH₃) = CH₂ | 56°/22.6 mbar (aspirator) | 3.9 | 7.1% |
| M₂D'CH₂CH(CH₃)₂ | --- | nil | --- |
| M₂D'CH₂CH(CH₃)CH₂Cl* | 36°/0.4 mbar | 21.3 | 34.1% |
| Heavies | --- | 2.2 | |

| | | | |
|---|---|---|---|
| * The yield of the desired hydrosilation product was 34.1%. The yields obtained compare favorably with those reported by Davis (J. Org. Chem. 38,838 (1973)) which were: M₂D'CH₂C(CH₃)= CH₂ (9%), and M₂D'CH₂CH(CH₃)CH₂Cl (34%) wherein the reactants were combined at the start. | | | |

### Comparative Example H

Reaction of MD'M with methallyl chloride; olefin added to hydrosiloxane.

In a 100 ml flask, there were placed 39.1g (0.176) mol) of MD'M which was heated to 75°, when 0.1 ml of the catalyst used in Comparative Example A was added. Addition of 16.3g (0.18 mol) of methyallyl chloride was begun, with reaction proceeding slowly for 30 min, followed by an exothermic temperature rise to 119°C. Reaction was complete after 1.5 h from start of addition. Direct vacuum distillation yielded the following products:

| Product | Boiling Point/Pressure | g | Yield |
|---|---|---|---|
| M₂D'Cl | 50°/22.6 mbar (aspirator) | 7.9 | 17.5% |
| M₂D'CH₂C(CH₃) = CH₂ | 31°/0.29 mbar (aspirator) | 0.7 | 1.4% |
| M₂D'CH₂CH(CH₃)₂ | 31°/0.29mbar | 4.9 | 10.0% |
| M₂D'CH₂CH(CH₃)CH₂Cl* | 33°/0.24mbar | 27.6 | 50.2% |
| Heavies | --- | 3.7 | |

| | | | |
|---|---|---|---|
| * The yield of the desired hydrosilation product was 50.2%, a relative improvement of 47.2% over the 34.1% obtained in Comparative Example C or the 34% reported by Davis. | | | |

### Example 5

Reaction of equimolar mixture of MD'M/Cl₃SiH with methallyl chloride.

In a 100 ml apparatus, there were combined 11.1g (0.05 mol) of MD'M, 4.5g (0.05 mol) of methallyl chloride, and 6.8g (0.05g mol) of Cl₃SiH. Pt catalyst solution (0.01 ml) was added at 40°C, causing a violent exothermic reaction to more than 100°C in 1 min. Vacuum distillation of the complete reaction yielded 12.78g (81.8%) of M₂D'CH₂CHMeCH₂Cl, indicating that Cl₃SiH is an effective promoter for the reaction of MD'M with methallyl chloride. The yield here is significantly higher than in Comparative Examples G or H, and the reaction time much shorter. Note that MD'M and D₃D' are chemical models for polyhydrosiloxane fluids which are articles of commerce, demonstrating clearly that reactions of such fluids with methallyl chloride will also be promoted.

### Example 6

Reaction of equimolar mixture of MD'M/MeSiHCl₂ with methallyl chloride.

In a 100 ml apparatus, there were combined 16.7g (0.075 mol) of MD'M, 8.6g (0.075 mol) of MeSiHCl₂, and 6.8g (0.075 mol) of methallyl chloride, followed by addition of 0.01 ml Pt catalyst solution at 48°C. There was an exothermic reaction to 92°C in 9 min, with the reaction being complete in 50 min. Vacuum distillation yielded 16.57g (70.7%) of M₂D'CH₂CHMeCH₂Cl, showing that MeSiHCl₂ is slightly less effective than Cl₃SiH as a promoter for the reaction of MD'M with methallyl chloride at the equimolar level.

### Example 7

Reaction of equimolar mixture MD'M/Et₃SiH with methallyl chloride.

In a 100 ml apparatus, there were combined 11.1g (0.05 mol) of MD'M, 5.8g (0.05 mol) of Et₃SiH, and 4.5g (0.05 mol) of methallyl chloride, followed by addition of 0.01 ml Pt catalyst solution at 55°C. Heat was applied over 80 min to 95°C when reaction was complete. Distillation yielded 51.3% of M₂D'CH₂CHMeCH₂Cl, indicating that Et₃SiH is not a very effective promoter for the reaction of MD'M with methallyl chloride when used at the equimolar level.

### Comparative Example I

Reaction of equimolar mixture MD'M/Me₂SiHCl with methallyl chloride.

In a 100 ml apparatus, there were combined 22.3g (0.1 mol) of MD'M, 9.5g (0.01 mol) of Me₂SiHCl, and 9.1g (0.1 mol) of methallyl chloride, followed by 0.015 ml Pt catalyst solution at 50°C. There was an exothermic reaction to 96°C in 6 min. The complete reaction was vacuum distilled yielding 13.28g (71.8%) of Me₂SiClCH₂CHMeCH₂Cl and 8.63g (27.6%) of M₂D'CH₂CHMeCH₂Cl. This example indicates that neither MD'M nor Me₂SiHCl is an effective promoter for reaction of the other with methallyl chloride when used at the equimolar level. The yield based on methallyl chloride was 99.4%, indicating very efficient reaction of the olefinic reactant.

**TABLE II**

| PROMOTION OF MD'M AND METHALLYL CHLORIDE | | | | | |
|---|---|---|---|---|---|
| Example | REACTANT A | OLEFIN | PROMOTER | YIELD % | TIME |
| Comp. G | Md'M | CH₂=CMeCH₂Cl | -- | 34.1* | 120 min |
| Comp. H | MD'M | CH₂=CMeCH₂Cl | -- | 50.2 | 90 min |
| 5 | MD'M | CH₂=CMeCH₂Cl | EqM. C1₃SiH | 81.8 | 1 min |
| 6 | MD'M | CH₂=CMeCH₂Cl | EqM. MeSiHCl₂ | 70.7 | 50 min |
| 7 | MD'M | CH₂=CMeCH₂Cl | EqM. Et₃SiH | 51.3 | 80 min |
| Comp. I | MD'M | CH₂=CMeCH₂Cl | EqM. Me₂SiHCl | 27.6⁺ | 6 min |

| | | | | | |
|---|---|---|---|---|---|
| * When Olefin was later added to hydrosiloxane rather than at start, the yield was 50.2% (see Comparative Example H). | | | | | |
| ⁺Me₂SiHCl competed rather than promoted production with MD'M. | | | | | |

As can be seen from Table II, Cl₃SiH is again the best promoter (almost 300% relative increase) in the reaction of MD'M with methallyl chloride to produce M₂D'CH₂CHMeCH₂Cl. This increased yield is particularly significantly because it represents an accurate chemical model for a commercially used polyhydrosiloxane.

The order of reactivity for greatest yield production is as follows: Cl₃SiH > MeSiHCl₂ > Et₃SiH. As observed in Comparative Example I. Me₂SiHCl actually interfered rather than promoted the reaction with MD'M since 71.8% of the yield was Me₂SiClCH₂CHMeCH₂Cl rather than the desired M₂D'CH₂CHMeCH₂Cl.

### Comparative Example J

Reaction of Et₃SiH with methallyl chloride.

A mixture of Et₃SiH (10.5g, 0.09 mol) and methallyl chloride (8.2g, 0.09 mol) was combined in a 150 ml apparatus and 0.05 ml Pt catalyst solution added, followed by heating at reflux (115°C) for 50 h. Additional Pt catalyst solution (0.025 ml) was added at 40 hr. The incomplete reaction was distilled, yielding 4.98g (36.8%) of Et₃SiCl and 3.48g (18.7%) of Et₃SiCH₂CHMeCH₂Cl. This example shows that the unpromoted reaction of Et₃SiH with methallyl chloride is very slow and endothermic.

### Example 8

Reaction of equimolar mixture of Et₃SiH/Cl₃SiH with methallyl chloride.

In a 100 ml apparatus, there were combined 11.6g (0.1 mol) of Et₃SiH, 13.6g (0.1 mol) of Cl₃SiH, and 9.1g of methallyl chloride, followed by addition of 0.05 ml Pt catalyst solution at 21°C. There was a rapid and exothermic reaction to 61°C in 2 min. Reaction appeared to have stopped and was heated to reflux over 4 h when VPC showed complete reaction. Vacuum distillation yielded 17.03g (82.5%) of Et₃SiCH₂CHMeCH₂Cl, indicating that Cl₃SiH is an effective promoter for the reaction of Et₃SiH with methallyl chloride.

### Example 9

Reaction of Et₃SiH with methallyl chloride promoted by 10 mol-% Cl₃SiH.

The reaction of Example 14 was repeated except that only 1.3g of Cl₃SiH was used. The reaction exothermed from 21°C to 118.5°C in 3 min, when reaction was complete. Vacuum distillation yielded 18.2g (88.1%) of Et₃SiCH₂CHMeCH₂Cl. This example shows that the use of 10 mol-% Cl₃SiH as promoter for the reaction between Et₃SiH and methallyl chloride reduces reaction time by a factor of 1,000, increases the yield of the desired hydrosilation product by a factor of 5, and eliminates the need for external heating, relative to the unpromoted reaction of Comparative Example J. It also demonstrates that 10 mol-% Cl₃SiH is more effective than equimolar Cl₃SiH in promoting this reaction.

### Comparative Example J'

Reaction of Et₃SiH with methallyl chloride promoted by 13 mol-% MeSiCl₃.

The reaction of Example 9 was repeated except that 2.0g MeSiCl₃ was used instead of Cl₃SiH. The reaction was heated up to 96°C over 8 h, and the complete reaction vacuum distilled, yielding 10.06g (48.7%) of Et₃SiCH₂CHMeCH₂Cl. This example shows that MeSiCl₃ is a promoter but less effective than Cl₃SiH for the reaction of Et₃SiH with methallyl chloride.

### Comparative Example L

Reaction of equimolar mixture of Et₃SiH/MeSiHCl₂ with methallyl chloride.

In a 100 ml apparatus, there were combined 11.6g (0.1 mol) of Et₃SiH, 11.5g (0.1 mol) of MeSiHCl₂, and 9.1g (0.1 mol) of methallyl chloride. After heating to 50°C, the heat source was removed and 0.05 ml Pt catalyst solution added, causing an exothermic reaction to 83.5°C in 4 min. The complete reaction was vacuum distilled, yielding 13.83g (67.3%) of MeSiCl₂CH₂CHMeCH₂Cl and 4.31g (20.9%) of Et₃SiCH₂CHMeCH₂Cl. This example shows that while MeSiHCl₂ at the equimolar level promotes the reaction between Et₃SiH and methallyl chloride, it also competes with Et₃SiH, reducing the yield of Et₃SiCH₂CHMeCH₂Cl.

### Comparative Example M

Reaction of equimolar mixture of Et₃SiH/Me₂SiHCl with methallyl chloride.

In a 100 ml apparatus, there were combined 7.1g (0.075 mol) of Me₂SiHCl, 8.7g (0.075 mol) of Et₃SiH, and 6.8g (0.075 mol) of methallyl chloride. Pt catalyst solution (0.01 ml) was added at 32°C, causing an exothermic reaction to 94°C in 4 min. Distillation of the complete reaction yielded 81.1% Me₂SiClCH₂CHMeCH₂Cl and 3.6% Et₃SiCH₂CHMeCH₂Cl. Et₃SiH does promote slightly the reaction of Me₂SiHCl with methallyl chloride.

### Example 11

Reaction between Et₃SiH and methallyl chloride promoted by Cl₃SiH at sub-ambient temperature.

In a 50 ml apparatus, there was combined 11.6g (0.1 mol) of Et₃SiH, 9.1g (0.1 mol) of methallyl chloride, and 1.4g (0.01 mol) of Cl₃SiH. The reaction mixture was cooled to 1°C and was catalyzed with 0.05 ml of Pt catalyst solution. After 98 min at 1-6°C, VPC analysis showed 47.9% conversion of reactants to Et₃SiCH₂CHMeCH₂Cl with a Et₃SiCH₂CHMeCH₂Cl/Et₃SiCl selectivity ratio of 24. This example shows that Cl₃SiH is an effective promoter for the reaction between Et₃SiH and methallyl chloride even at sub-ambient temperatures.

### Comparative Example K

Reaction of Et₃SiH with methallyl chloride promoted by 10 mol-% Cl₃CH.

In a 50 ml apparatus, there were combined 7.0g (0.06 mol) of Et₃SiH, 5.4g (0.06 mol) of methallyl chloride, and 0.7g (0.006 mol) of trichloromethane, followed by addition of 0.02 ml of Pt catalyst solution at 37°C. Heat was applied up to 80°C over 2 h. Analysis by VPC showed no reaction, indicating that Cl₃CH is ineffective as a promoter for the reaction of Et₃SiH with methallyl chloride. Note that Cl₃CH is the carbon analog of Cl₃SiH.

**TABLE III**

| PROMOTION OF Et₃SiH AND METHALLYL CHLORIDE | | | | | |
|---|---|---|---|---|---|
| Example | REACTANT A | OLEFIN | PROMOTER | YEILD % | TIME |
| COMP. J | Et₃SiH | CH₂=CMeCH₂Cl | -- | 18.7 | 3000 min |
| 8 | Et₃SiH | CH₂=CMeCH₂Cl | EqM. Cl₃SiH | 82.5 | 242 min |
| 9 | Et₃SiH | CH₂=CMeCH₂Cl | 10 mol% Cl₃SiH | 88.1 | 3 min |
| Comp. J' | Et₃SiH | CH₂=CMeCH₂Cl | 13 mol% MeSiCl₃ | 48.7 | 480 min |
| Comp. K | Et₃SiH | CH₂=CMeCH₂Cl | 10 mol% Cl₃CH | -- | 120 min |
| Comp. L | Et₃SiH | CH₂=CMeCH₂Cl | MeSiHCl₂ | 20.9** | |
| Comp. M | Et₃SiH | CH₂=CMeCH₂Cl | Me₂SiHCl | 3.6** | |
| 11 | Et₃SiH | CH₂=CMeCH₂Cl | 10 mol% Cl₃SiH | 47.9 | 98 min |

| | | | | | |
|---|---|---|---|---|---|
| ** In both cases, both MeSiHCl₂ and Me₂SiHCl are in competition with the reactant rather than promoting it thus accounting for the low yields of Et₃SiCH₂CHMeCH₂Cl. | | | | | |

From Table III, it can be seen that the most dramatic improvement in yield and in time are once more with Cl₃SiH (almost 500% relative yield increase). Another important advantage of the invention is illustrated by Example 11. Example 11 is very significant because promotion is being done at subambient temperatures. The lowest temperature tested was 0°C but this was by no means the lower limit. This is apparently the first example of a low temperature, platinum-catalyzed hydrosilation reaction involving a trialkylsilane.

The most effective promoter tested with these reactants was Cl₃SiH. Comparative Example K is to illustrate that the non-siloxane Cl₃CH has no promotional effect.

### Comparative Example N

Reaction of Et₃SiH with methallyl chloride promoted by SnCl₂.

A solution of 0.43g SnCl₂·2H₂O in 5.0g of Pt catalyst solution was prepared. A 50 ml apparatus was charged with 10.5g (0.09 mol) of Et₃SiH and 9.2g (0.09 mol) of methallyl chloride, and the contents heated to 62°C. The Pt/Sn solution (0.05 ml) was added, and heat applied to reflux (83°C) over 3 h 40 min. VPC analysis showed no enhancement of Et₃SiCH₂CHMeCH₂Cl yield, indicating that the H₂PtCl₆/SnCl₂ couple as disclosed in prior art (U.S. - A - 4,089,882) is an ineffective hydrosilation catalyst for this reaction.

### Example 12

Reaction of Et₃SiH with methallyl chloride promoted by F₃SiH.

Gaseous F₃SiH was generated by adding Cl₃SiH to C₆H₅SiF₃ containing Bu₃N and the F₃SiH so generated was bubbled through a reaction mixture of 11.6g (0.1 mol) of Et₃SiH, 9.1g (0.1 mol) of methallyl chloride, and 0.02 ml Pt catalyst solution for 20 min periods at 21-48°C, with reaction being stirred at room temperature between periods. Analysis by VPC showed 34.6% conversion of reactants to Et₃SiCH₂CHMeCH₂Cl with a Et₃SiCH₂CHMeCH₂Cl/Et₃SiCl ratio of 24 on a weight basis. This example shows that F₃SiH does promote the reaction of Et₃SiH with methallyl chloride, but not as effectively as Cl₃SiH. F₃SiH has the disadvantage of being a gas at room temperature, and is considered to be unstable.

### Example 13

Reaction of Et₃SiH with methallyl chloride promoted by Br₃SiH.

In a 50 ml apparatus, there were combined 11.6g (0.1 mol) of Et₃SiH, 9.1g (0.1 mol) of methallyl chloride, and 2.6g (0.011 mol) of Br₃SiH. Pt catalyst solution was added (0.02 ml) at 60°C, followed by heating up to 70°C over 100 min. Analysis by VPC showed 66.3% conversion of reactants to Et₃SiCH₂CHMeCH₂Cl, indicating that Br₃SiH also promotes the reaction between Et₃SiH and methallyl chloride, but not as effectively as Cl₃SiH. Br₃SiH has the disadvantage of being pyrophoric.

### Comparative Example O

Reaction of Et₃SiH with methallyl chloride promoted by Cl₃GeH.

In a 50 ml apparatus, there were combined 11.6g (0.1 mol) of Et₃SiH, 9.1g (0.1 mol) of methallyl chloride, and 0.05 ml of Pt catalyst solution. Cl₃GeH (0.18g. 0.001 mol) was added at 23°C, with an additional 0.09g being added 19 min later. Reaction was heated to 68°C over 51 min and allowed to stand overnight at room temperature. Analysis by VPC showed no formation to Et₃SiCH₂CHMeCH₂Cl indicating that Cl₃GeH is not an effective promoter for the reaction of Et₃SiH with methallyl chloride.

### Comparative Example P

Reaction of Et₃SiH with methallyl chloride promoted by PCl₃.

The reaction of Comparative Example O was repeated, except that in one case, 1.4g of PCl₃ was used instead of Cl₃GeH, and in the other case, 0.05 ml PCl₃ was precombined with the 0.05 ml Pt catalyst solution. In neither case was there any formation of Et₃SiCH₂CHMeCH₂Cl even after heating several hours, indicating PCl₃ is not an effective promoter for the reaction between Et₃SiH and methallyl chloride.

**TABLE IV**

| PROMOTIONAL EFFECTS OF OTHER PROMOTERS | | | | | |
|---|---|---|---|---|---|
| Example | REACTANT A | OLEFIN | PROMOTER | YIELD % | TIME |
| Comp. J | Et₃SiH | CH₂=CMeCH₂Cl | -- | 18.7 | 3000 min |
| Comp. N | Et₃SiH | CH₂=CMeCH₂Cl | SnCl₂* | =18.00 | 220 min |
| 12 | Et₃SiH | CH₂=CMeCH₂Cl | F₃SiH** | 34.6 | 60 min |
| 13 | Et₃SiH | CH₂=CMeCH₂Cl | Br₃SiH*** | 66.3 | 100 min |
| Comp. O | Et₃SiH | CH₂=CMeCH₂Cl | Cl₃GeH | -- | 51 min |
| Comp. P | Et₃SiH | CH₂=CMeCH₂Cl | PCl₃ | -- | 7120 min |

| | | | | | |
|---|---|---|---|---|---|
| * The promoter was prepared as a 0.05 ml Pt/Sn solution when a solution of 0.43g SnCl₂ and 2H₂O in 5.0g of Pt catalyst solution were combined. | | | | | |
| ** Although some promotion is seen, F₃SiH has the disadvantage of being a gas at room temperature and is considered to be unstable. | | | | | |
| *** Br₃SiH has the disadvantage of being pyrophoric | | | | | |

Table IV is to illustrate that the second silane really is the key to the invention since comparative experiments involving other promoters either do not function or have other serious problems associated with them.

### Comparative Example Q

Reaction of Cl₃SiH with methallyl chloride.

In a 50 ml apparatus, there were combined 13.6g (0.1 mol) of Cl₃SiH and 9.1g (0.1 mol) of methallyl chloride, followed by 0.05 ml Pt catalyst solution. Reaction was heatedto reflux (44°C) in 55 min, and was heated at reflux temp. which increased to 84°C after 6 h, followed by standing at room temp. overnight. VPC analysis indicated 67.3% conversion of reactants to a single product, Cl₃SiCH₂CHMeCH₂Cl. This example shows that the unpromoted reaction of Cl₃SiH with methallyl chloride is relatively slow.

### Example 14

Reaction of Cl₃SiH with methallyl chloride promoted by Et₃SiH.

The reaction of Comparative Example Q was repeated except that 0.08g (0.5 mol-%) of Et₃SiH was added after the Pt catalyst. The reaction was heated intermittently up to 100°C over 170 min, followed by vacuum distillation, which yielded 19.73g (87.3%) of Cl₃SiCH₂CHMeCH₂Cl. This example shows that low levels of Et₃SiH effectively promote the reaction between Cl₃SiH and methallyl chloride.

### Comparative Example R

Reaction of equimolar mixture of Cl₃SiH/MeSiHCl₂ with methallyl chloride.

In a 100 ml apparatus, there as combined 13.6g (0.1 mol) of Cl₃SiH, 9.1g (0.1 mol) of methallyl chloride, and 11.5g (0.1 mol) of MeSiHCl₂, followed by 0.05 ml Pt catalyst solution at 21°C. Gentle heating caused an exothermic reaction to 52°C in 22 min. The complete reaction was vacuum distilled, yielding 14.14g (68.8%) of MeSiCl₂CH₂CHMeCH₂Cl and 4.86g (21.5%) of Cl₃SiCH₂CHMeCH₂Cl. This example indicates that at the equimolar level, neither Cl₃SiH nor MeSiHCl₂ is an effective promoter for reactions of the other with methallyl chloride.

### Comparative Example S

Reaction of equimolar mixture of Cl₃SiH/Me₂SiHCl with methallyl chloride.

In a 50 ml apparatus, there was combined 7.1g (0.075 mol) of Me₂SiHCl, 10.2g (0.075 mol) of Cl₃SiH, and 6.8g (0.075 mol) of methallyl chloride. Pt catalyst solution (0.02 ml) was added at 31°C causing a violent exothermic reaction to more than 60°C in 3 min. VPC analysis of the complete reaction showed 73.5% conversion to Me₂SiClCH₂CHMeCH₂Cl and 2.9% conversion to Cl₃SiCH₂CHMeCH₂Cl. This example shows that Cl₃SiH is an effective promoter for the reaction of Me₂SiHCl with methallyl chloride, and suggests that lower levels of Cl₃SiH would be just as effective.

**TABLE V**

| PROMOTION OF Cl₃SiH AND METHALLYL CHLORIDE | | | | | |
|---|---|---|---|---|---|
| Example | REACTANT A | OLEFIN | PROMOTER | YIELD % | TIME |
| Comp. Q | Cl₃SiH | CH₂=CMeCH₂Cl | -- | 67.3 | 360 min |
| 14 | Cl₃SiH | CH₂=CMeCH₂Cl | 0.5 mol-% Et₃SiH | 87.3 | 170 min |
| Comp. R | Cl₃SiH | CH₂=CMeCH₂Cl | EqM. MeSiHCl₂ | 21.5** | 22 min |
| Comp. S | Cl₃SiH | CH₂=CMeCH₂Cl | EqM. Me₂SiHCl | 2.9** | |

| | | | | | |
|---|---|---|---|---|---|
| ** Here, 68.8% MeSiCl₂CH₂CHMeCH₂Cl are produced showing, if anything, Cl₃SiH slightly promotes MeSiHCl₂ rather than the other way around. With regard to Me₂SiHCl, 73.5% conversion to Me₂SiClCH₂CHMeCH₂Cl is effected showing Cl₃SiH is a good promoter for this reactant as well. | | | | | |

Table V shows that Promotional effects depend on the nature of the reactant and promoter. If the promoter itself can compete with the reactant to react with the olefin, the reactant may in effect be acting as nothing more than a promoter itself as is seen in Comparative Examples R and S.

### Comparative Example T

Reaction of MeSiHCl₂ with methallyl chloride.

In a 50 ml apparatus, there were combined 12.2g (0.106 mol) of MeSiHCl₂ and 9.6g (0.106 mol) of methallyl chloride, followed by 0.05 ml Pt catalyst solution at 21°C. Gentle heating caused a smooth exothermic reaction to 120° in 18 min. VPC analysis showed 97.7% conversion to MeSiCl₂CH₂CHMeCH₂Cl. This example shows that the unpromoted reaction of MeSiHCl₂ with methallyl chloride is relatively rapid, and the yield high.

### Comparative Example U

Reaction of Me₂SiHCl with methallyl chloride.

In a 100 ml apparatus, there were combined 14.2g (0.15 mol) of Me₂SiHCl and 13.6g (0.15 mol) of methallyl chloride, followed by 0.05 ml Pt catalyst solution at 21°C. Gentle heating caused a smooth exothermic reaction to 90°C in 16 min. Reaction was heated at 80°C until completed (50 min). Vacuum distillation yielded 23.14g (83.4%) of Me₂SiClCH₂CHMeCH₂Cl.

### Comparative Example V

Reaction of equimolar mixture of equimolar mixture of MeSiHCl₂/Me₂SiHCl with methallyl chloride.

In a 100 ml apparatus, there were combined 8.6g (0.75 mol) of MeSiHCl₂, 7.1g (0.075 mol) of Me₂SiHCl, and 6.8g (0.075 mol) of methallyl chloride. Pt catalyst solution (0.01 ml) was added at 32° causing an exothermic reaction to 57°C and completion in 10 min. Distillation yielded 54.0% of Me₂SiClCH₂CHMeCH₂Cl and 19.6% of MeSiCl₂CH₂CHMeCH₂Cl, indicating that at the equimolar level, neither MeSiHCl₂ nor Me₂SiHCl is a very effective promoter for reactions of the other with methallyl chloride, in terms of yield, but that reaction rates are increased.

**TABLE VI**

| PROMOTION OF MeSiHCL₂ AND Me₂SiHCl AND METHALLYL CHLORIDE | | | | | |
|---|---|---|---|---|---|
| Example | REACTANT A | OLEFIN | PROMOTER | YIELD % | TIME |
| COMP. T | MeSiHCl₂ | CH₂=CMeCH₂Cl | -- | 97.7* | 18 min |
| Comp. U | Me₂SiHCl | CH₂=CMeCH₂Cl | -- | 83.4* | 50 min |

| | | | | | |
|---|---|---|---|---|---|
| * As already suggested from some of the other examples (e.g., Comparative examples L, M, R and S), both these reactants react relatively well with methallyl chloride even without promotion. Neither, however, is a very effective promoter for the other (see Comparative Example V). | | | | | |

### Comparative Example W

Reaction of Et₃SiH with methallyl chloride promoted by Cl₃SiH using other noble metal catalysts.

A standard solution of 69.8g (0.6 mol) of Et₃SiH, 54.3g (0.6 mol) of methallyl chloride, and 8.1g (0.6 mol) of Cl₃SiH was made up to simulate the stoichiometry of Example 9. Other noble metal hydrosilation catalyst including platinum acetylacetonate, ethylene platinous chloride, platinum on carbon, bis(triphenylphosphine) platinum dichloride, ruthenium acetylacetonate, dichlorodicarbonyl-bis(triphenylphosphine) ruthenium, rhodium dicarbonyl dichloride dimer, and chloroiridic acid hexahydrate were tested at appropriate concentrations in aliquots of the standard solution. Only ethylene platinous chloride was as effective as the standard H₂PtCl₆ catalyst solution, with none being more effective. This example indicates that only soluble Pt compounds not containing strongly bound ligands such as acetylacetonate or phosphine groups are effective catalysts in the processes of the present invention. Note, in particular, that platinum on carbon (Pt/C) was ineffective at the lower temperatures (ambient or sub-ambient) where H₂PtCl₆ is effective, differentiating the instant invention from the prior art. The compounds (CH₂PØ₂)₂PtClSiMe₃, (CH₂PØ₂)₂Pt(SiMe₃)₂ and and [CH₂(PØ₂)₂PtCl]₂ were also ineffective as catalysts in the above standard reaction.

### Comparative Example X

Reaction of D₃D' with allyl chloride; reactants combined at start.

In a 100 ml flask there were combined 62.0g of 90% D₃D' (containing 0.2 mol of D₃D'), 17.0g (0.22 mol) of allyl chloride, and 0.2 ml of the catalyst used in Comparative Example A. Heat was applied to reflux temperature which increased gradually from 68°C to 125°C over 1.5 hrs. The reaction mixture was suction filtered into a 100 ml distillation flask and distilled, yielding the following products:

| Product | Boiling Point/Pressure | g | Yield |
|---|---|---|---|
| D₃D'Cl | 33°/ 0.4 mbar | 37.8 | 59.7% |
| D₃D'CH₂CH₂CH₃ | 44°/ 0.4 mbar | 4.0 | 6.2% |
| D₃D'CH₂CH₂CH₂Cl* | 63°/ 0.27 mbar | 8.0 | 11.2% |
| D₃D'CH₂CH₂CH₂D'D₃ | 117°/0.33 mbar | 2.4 | -- |

| | | | |
|---|---|---|---|
| * The yield of the desired hydrosilation product was only 11.2% | | | |

### Comparative Example Y

Reaction of D₃D' with allyl chloride; olefin added to hydrosiloxane.

In the apparatus of Comparative Example X, there were placed 56.4g (0.2 mol) of D₃D' which was heated to 78°C, when 0.2 ml of the catalyst used in Example 2 was added. Dropwise addition of 15.3g (0.2 mol) of allyl chloride was begun and the reaction temperature was maintained at 95°-124°C. until completion (37 min). The reaction mixture was distilled yielding the following products;

| Product | Boiling Point/Pressure | g | Yield |
|---|---|---|---|
| D₃D'Cl | 27°/ 0.93 mbar | 22.0 | 34.8% |
| D₃D'CH₂CH₂CH₃ | 29°/ 0.93 mbar | 16.6 | 33.0% |
| D₃D'CH₂CH₂CH₂Cl* | 53°/ 0.27 mbar | 13.9 | 19.4% |
| D₃D'CH₂CH₂CH₂D'D₃ | ---------- | trace | -- |
| Heavies | ---------- | 1.6 | -- |

| | | | |
|---|---|---|---|
| * The yield of the desired hydrosilation product was 19.4%, a 73.2% relative improvement over the 11.2% obtained in Comparative Example G. | | | |

### Example 15

Reaction of equimolar mixture of D₃D'/Cl₃SiH with allyl chloride.

In a 100 ml apparatus, there were combined 15.5g (0.114 mol) of Cl₃SiH, 32.3g (0.114 mol) of D₃D' and 8.8g (0.114 mol) of allyl chloride. Pt catalyst solution (0.05 ml) was added at 21°C, causing a gentle exothermic reaction to 83°C in 52 min. Vacuum distillation yielded 7.02g (29.0%) of Cl₃SiCH₂CH₂CH₂Cl and 10.2g (24.9%) of D₃CH₂CH₂CH₂Cl. This example shows that Cl₃SiH at the equimolar level increases both rate and yield of the reaction between D₃D' and allyl chloride.

### Example 16

Reaction of equimolar mixture of D₃D'/MeSiHCl₂ with allyl chloride.

In a 100 ml apparatus, there were combined 15.8g (0.14 mol) of MeSiHCl₂, 38.6g (0.14 mol) of D₃D', and 10.5g (0.1 mol) of allyl chloride. Pt catalyst solution (0.05 ml) was added at 19°C and the reaction mixture allowed to stir overnight at 28°C (heat generated by magnetic stirrer). Gentle heat was applied to the unreacted mixture, causing an exothermic reaction to 95°C in 45 min. Vacuum distillation yielded 5.82g (22.2%) of MeSiCl₂CH₂CH₂CH₂Cl and 15.65g (31.8% of D₃D'CH₂CH₂CH₂Cl, indicating that at the equimolar level, MeSiHCl₂ is more effective than Cl₃SiH at increasing the yield of the reaction between D₃D' end allyl chloride.

### Comparative Example Z

Reaction of equimolar mixture of D₃D'/MeSiHCl₂ with allyl chloride in the presence of tributylamine.

The reaction of Example 16 was repeated except at 0.1 mol of each reactant was used and 0.05 ml of Bu₃N was added after the Pt catalyst. The reaction exothermed from 22°C to 48°C in 108 min, and was vacuum distilled, yielding 10.09g (52.7%) of MeSiCl₂CH₂CH₂CH₂Cl and 0.8g (2.2%) of D₃D'CH₂CH₂CH₂Cl. The tertiary amine promoter (Bu₃N is claimed as a promoter for MeSiHCl₂ in its reaction with allyl chloride) enhances the hydrochlorosilane reactivity, and interferes with the hydrochlorosilane promotion of the hydrosiloxane reactivity. Note that the relative reactivities of D₃D' and MeSiHCl₂ are reversed in Examples 16 and Comparative Example Z.

### Example 17

Reaction of equimolar mixture of D₃D'/Et₃SiH with allyl chloride.

In a 100 ml apparatus, there were combined 28.3g (0.1 mol) of 98% D₃D', 11.6g (0.1 mol) of Et₃SiH, and 7.7g (0.1 mol of allyl chloride. Pt catalyst solution (0.05 ml) was added at 22°C, followed by heating up to 66°C over 145 min. Vacuum distillation yielded 7.15g (19.9%) of D₃D'CH₂CH₂CH₂Cl, and a trace of Et₃SiCH₂CH₂CH₂Cl. This example shows that neither D₃D' nor Et₃SiH are very effective promoters at the equimolar level for reactions of the other with allyl chloride.

### Example 18

Reaction of equimolar mixture of D₃D'/MD'M with allyl chloride.

In a 100 ml apparatus, there were combined 22.2g (0.1 mol of MD'M, 30.5g (0.1 mol) of 92% D₃D', and 7.7 g (0.1 mol) of allyl chloride. Pt catalyst solution (0.05 ml) was added at 25°C, and heat applied to 80°C over 40 min, followed by an exothermic reaction to 140°C over 15 min. Vacuum distillation yielded 1.15g (3.9%) of M₂D'CH₂CH₂CH₂Cl and 6.91g (19.3%) of D₃D'CH₂CH₂CH₂Cl, indicating that neither D₃D' nor MD'M are very effective promoters for reaction of the other with allyl chloride when used at the equimolar level.

### Example 19

Reaction of equimolar mixture of D₃D'/Me₂SiHCl with allyl chloride.

In a 100 ml apparatus, there were combined 30.5g (0.1 mol) of 92% D₃', 9.5g (0.1 mol) of Me₂SiHCl, and 7.7g (0.1 mol) of allyl chloride. Pt catalysts solution (0.05 ml was added at 42°C and heat applied to 97.5°C over 144 min. Vacuum distillation yielded 3.99g (23.3%) of Me₂SiClCH₂CH₂CH₂Cl and 11.15g (31.1%) of D₃D'CH₂CH₂CH₂Cl. This example shows that Me₂SiHCl is slightly less effective than MeSiHCl₂ in promoting the reaction between D₃D' and allyl chloride when used at the equimolar level.

**TABLE VII**

| PROMOTION OF D₃D' AND ALLYL CHLORIDE | | | | | |
|---|---|---|---|---|---|
| Example | REACTANT A | OLEFIN | PROMOTER | YIELD % | TIME |
| Comp. X | D₃D' | CH₂=CHCH₂Cl | -- | 11* | 90 min |
| Comp. Y | D₃D' | CH₂=CHCH₂Cl | -- | 19.4 | 37 min |
| 15 | D₃D' | CH₂=CHCH₂Cl | EqM. Cl₃SiH | 24.9 | 52 min |
| 16 | D₃D' | CH₂=CHCH₂Cl | EqM. MeSiHCl₂ | 31.8 | 45 min |
| Comp. Z | D₃D' | CH₂=CHCH₂Cl | EqM. MeSiHCl₂ and tributylamine | 2.2 | 108 min |
| 17 | D₃D' | CH₂=CHCH₂Cl | EqM. Et₃SiH | 19.9 | 145 min |
| 18 | D₃D' | CH₂=CHCH₂Cl | EqM. MD'M | 19.3 | 55 min |
| 19 | D₃D' | CH₂=CHCH₂Cl | EqM. Me₂SiHCl | 31.1 | 144 min |

| | | | | | |
|---|---|---|---|---|---|
| * When the olefin was later added to the hydrosiloxane rather than at the start, the yield was improved to 19.4% (see Comparative Example Y). | | | | | |

Several observations may be made from Table VII. First, Comparative Example Z shows how tributylamine interferes with promotion relative to Example 16.

Second, comparing Table VII to Table I, it can be seen that the yields of the reaction may vary merely by changing the olefin reactant. For example, both MeSiHCl₂ and MeSiHCl are stronger promoters than Cl₃SiH when using allyl chloride while, when methallyl chloride is used as the reactant olefin (Table I), the opposite is true.

### Comparative Example AA

Reaction of MD'M with allyl chloride.

In a 100 ml apparatus, there were combined 22.3g (0.1 mol) of MD'M and 7.7g (0.1 mol) of allyl chloride. Pt catalyst solution (0.05 ml) was added at 48°C, causing a gradual exothermic reaction to 120°C in 41 min. Vacuum distillation yielded 4.50g (15.1%) of M₂D'CH₂CH₂CH₂Cl as one of the several products.

### Comparative Example BB

Reaction of MD'M with allyl chloride promoted by SnCl₂.

The reaction of Comparative Example AA was repeated except that the Pt/Sn catalyst solution of Comparative Example K was used instead of the standard H₂PtCl₆ solution. There was an exothermic reaction from 45°C to 73°C over 53 min. VPC analysis showed M₂D'Cl was the major product with only a trace of M₂D'CH₂CH₂CH₂Cl, such that SnCl₂ does not promote the hydrosilation reaction between MD'M and allyl chloride.

### Example 20

Reaction of equimolar mixture of MD'M/Cl₃SiH with allyl chloride.

In a 100 ml apparatus, there were combined 11.1g (0.05 mol) of MD'M, 6.8g (0.05 mol) of Cl₃SiH, and 3.9g (0.05 mol) of allyl chloride. Pt catalyst solution (0.025 ml) was added at 23°C, causing a violent exothermic reaction to 96°C in 3 min. Vacuum distillation yielded 0.13g of Cl₃SiCH₂CH₂CH₂Cl and 5.99g (40.1%) of M₂D'CH₂CH₂CH₂Cl. This example shows that Cl₃SiH at the equimolar level is an effective promoter for the reaction of MD'M with allyl chloride, enhancing both rate and yield relative to the unpromoted reaction of Comparative Example AA.

### Example 21

Reaction of equimolar mixture of MD'M/MeSiHCl₂ with allyl chloride.

In a 100 ml apparatus, there were combined 16.7g (0.075 mol) of MD'M, 8.6 g (0.075 mol) of MeSiHCl₂, and 5.7g (0.075 mol) of allyl chloride. Pt catalyst solution (0.01 ml) was added at 54°C and the reaction heated up to 84°C over 2 hr. Vacuum distillation yielded 44.4% of M₂D'CH₂CH₂CH₂Cl and 7.6% of MeSiCl₂CH₂CH₂CH₂Cl. This example shows that MeSiCl₂H at the equimolar level effectively enhances yield, but not rate, of the reaction between MD'M and allyl chloride.

### Comparative Example CC

Reaction of equimolar mixture of MD'M/Me₂SiHCl with allyl chloride.

In a 100 ml apparatus, there were combined 22.3g (0.1 mol) of MD'M, 9.5g (0.1 mol) of Me₂SiHCl, and 7.7g (0.1 mol) of allyl chloride. Pt catalyst solution was added at 74°C (0.05 ml). followed by heating up to 92°C over 162 min. Vacuum distillation of the reaction yielded 18.1% of M₂D'CH₂CH₂CH₂Cl and 10.3% of Me₂SiClCH₂CH₂CH₂Cl. This example shows that neither MD'M nor Me₂SiHCl is an effective promoter at the equimolar level for reactions of the other with allyl chloride.

### Example 22

Reaction of equimolar mixture of MD'M/Et₃SiH with allyl chloride.

In a 100 ml apparatus, there were combined 11.1g (0.05 mol) of MD'M. 5.8g (0.05 mol) of Et₃SiH, and 3.8g (0.05 mol) of allyl chloride. Pt catalyst solution (0.01 ml) was added at 54°C and the reaction heated to 90°C over 28 min. VPC analysis of the reaction mixture showed 23.9% of M₂D'CH₂CH₂CH₂Cl and 7.2% Et₃SiCH₂CH₂CH₂Cl, indicating that both MD'M and Et₃SiH are slightly effective promoters at the equimolar level for reactions of the other with allyl chloride.

**TABLE VIII**

| PROMOTION OF MD'M AND ALLYL CHLORIDE | | | | | |
|---|---|---|---|---|---|
| Example | REACTANT A | OLEFIN | PROMOTER | YIELD % | TIME |
| Comp. AA | MD'M | CH₂=CHCH₂Cl | -- | 15.1 | 41 min |
| Comp. BB | MD'M | CH₂=CHCH₂Cl | Sn₂Cl₂* | -- | 53 min |
| 20 | MD'M | CH₂=CHCH₂Cl | EqM. Cl₃SiH | 40.1 | 3 min |
| 21 | MD'M | CH₂=CHCH₂Cl | EqM. MeSiHCl₂ | 44.4 | 120 min |
| Comp. CC | MD'M | CH₂=CHCH₂Cl | EqM. Me₂SiHCl | 18.1** | 162 min |
| 22 | MD'M | CH₂=CHCH₂Cl | EqM. Et₃SiH | 23.9 | 28 min |

| | | | | | |
|---|---|---|---|---|---|
| * This was the same Pt/Sn catalyst solution of Comparative Example K. | | | | | |
| ** Because promotion was just under 20%, this was not included as an example of the invention. | | | | | |

Again, although Table II varies from Table VIII only by the olefin employed, differences are observed. For example, MeSiHCl₂ promotes greater yield than Cl₃SiH (although rate is much slower). Both, however, are still greater than Et₃SiH which in turn is greater than Me₂SiHCl.

### Comparative Example DD

Reaction of Et₃SiH with allyl chloride.

In a 100 ml apparatus, there were combined 11.6g (0.1 mol) of Et₃SiH, 7.7g (0.1 mol of allyl chloride, and 0.05 ml Pt catalyst solution at 19°C. After stirring 1 h , temperature had increased to 27°C, followed by heating at 70°C for 17 hr. The incomplete reaction was vacuum distilled, yielding 8.9g (42%) of Et₃SiCl, and 3.0g (15.5%) of Et₃SiCH₂CH₂CH₂Cl. The Et₃SiCH₂CH₂CH₂Cl/Et₃SiCl molar selectivity ratio was 0.37. This example shows that the unpromoted reaction between Et₃SiH and CH₂ = CHCH₂Cl is very slow.

### Comparative Example EE

Reaction of equimolar mixture of Et₃SiH/Cl₃SiH with allyl chloride.

In a 50 ml apparatus, there were combined 11.6g (0.01 mol) of Et₃SiH, 13.6g (0.1 mol) of Cl₃SiH, and 7.7g (0.01 mol) of allyl chloride. Pt catalyst solution (0.05 ml) was added, causing a gentle exothermic reaction from 19°C to 36°C in 35 min. Heat was applied up to 66°C over the next 75 min. Vacuum distillation yielded 0.80g (4.2%) of Et₃SiCH₂CH₂CH₂Cl and 11.48g (54.2%) of Cl₃SiCH₂CH₂CH₂Cl. This example shows that Et₃SiH at the equimolar level is an effective promoter for the reaction between Cl₃SiH and allyl chloride, since that reaction is very slow at reflux temperature in the absence of a promoter.

### Comparative Example FF

Reaction of equimolar mixture of Et₃SiH/Cl₃SiH with allyl chloride, latter added to former.

The reaction of Comparative Example EE was repeated except that the allyl chloride was added dropwise to a mixture of the two silanes and the Pt catalyst beginning at 39°C. There was a smooth exothermic reaction up to 80° over the addition (30 min) followed by 15 min at 80°C. Vacuum distillation yielded 3.17g (16.5%) of Et₃SiCH₂CH₂CH₂Cl, and 10.67g (50.3%) of Cl₃SiCH₂CH₂CH₂Cl. This example shows that adding the olefin as above allows both Cl₃SiH and Et₃SiH to promote the hydrosilation reaction rate of the other toward allyl chloride. Selectivity and yield were also improved for Et₃SiH, with a Et₃SiCH₂CH₂Cl/Et₃SiCl molar selectivity ratio of 2.5.

### Example 23

Reaction of equimolar mixture of Et₃SiH/Cl₃SiH with allyl chloride, former added to latter.

The reaction of Comparative Example FF was repeated except that the silane mixture was added dropwise to the allyl chloride containing the Pt catalyst, beginning at 40.5°C. Heat was applied up to 50°C over 132 min (time of addition). Vacuum distillation yielded 6.30g (32.7%) of Et₃SiCH₂CH₂CH₂Cl and 7.71g (36.4%) of Cl₃SiCH₂CH₂CH₂Cl. This example shows that while this sequence of combination of reactants causes a lower reaction rate, yield and selectivity of the Et₃SiH reaction with allyl chloride are improved further. The Et₃SiCH₂CH₂CH₂Cl/Et₃SiCl molar ratio was 2.82.

### Example 24

Reaction of Et₃SiH with 10/1 molar mixture of allyl chloride/Cl₃SiH, latter added to former.

In a 25 ml apparatus, there were combined 11.6g (0.1 mol) of Et₃SiH and 0.05 ml of Pt catalyst solution. Heat was applied to 60°C and addition of a mixture of 7.7g (0.1 mol) of allyl chloride and 1.4g (0.01 mol) of Cl₃SiH begun. There was a smooth exothermic reaction up to 80°C by the end of the addition (15 min) with temperature continuing to rise to 129°C 5 min later. Vacuum distillation yielded 12.12g (63.0%) of Et₃SiCH₂CH₂CH₂Cl, with a Et₃SiCH₂CH₂CH₂Cl/Et₃SiCl molar ratio of 2.73. This example shows that low levels of Cl₃SiH effectively promote both rate and yield of the reaction between Et₃SiH and allyl chloride, particularly when the low levels are maintained throughout the reaction by replenishment.

### Example 25

Reaction of 8/1 molar mixture of Et₃SiH/Cl₃SiH with allyl chloride, latter added to former.

In a 100 ml apparatus, there were combined 11.6g (0.1 mol) of Et₃SiH, 1.7g (0.0125 mol) of Cl₃SiH and 0.05 ml of Pt catalyst solution. The mixture was heated to 65°C and addition of 7.7 g (0.1 mol) of allyl chloride begun. There was an exothermic reaction to 108.5°C over 16 min, followed by a temperature drop. Addition of allyl chloride was complete in 31 min, with heat then applied at reflux (up to 114°C) over 170 min. Vacuum distillation yielded 7.88g (40.9%) of Et₃SiCH₂CH₂CH₂Cl with a Et₃SiCH₂CH₂CH₂Cl/Et₃SiCl selectivity ratio of 1.13. This example shows that this sequence of combination of reactants allows the Cl₃SiH promoter to be consumed, at which point the reaction of Et₃SiH with allyl chloride proceeds at the low rate and selectivity exhibited in Comparative Example DD.

### Example 26

Reaction of 10/1 molar mixture of Et₃SiH/Cl₃SiH with allyl chloride, former added to latter.

In a 50 ml apparatus, there were combined 7.7g (0.1 mol) of allyl chloride and 0.05 ml of Pt catalyst solution. the mixture was heated to 44°C and addition of a mixture of 11.6g (0.1 mol) of Et₃SiH and 1.4g (0.01 mol) of Cl₃SiH begun. Reaction was heated up to 54.5°C during addition (30 min). There was a violent exothermic reaction from 62°C to 110°C 16 min later. Vacuum distillation yielded 7.79g (40.5%) of Et₃SiCH₂CH₂CH₂Cl, with a Et₃SiCH₂CH₂CH₂Cl/Et₃SiCl selectivity ratio of 1.23. This example and the previous one show that the preferred sequence of combination of reactants for most effective Cl₃SiH promotion of the reaction of Et₃SiH with allyl chloride is that of Example 24.

### Example 27

Reaction of Et₃SiH with allyl chloride using Cl₃SiH/H₂PtCl₆ solution as catalyst.

The reaction of Comparative Example DD was repeated except that 0.1 ml of the Cl₃SiH/H₂PtCl₆ catalyst solution of Example 16 was used instead of the standard H₂PtCl₆ solution. Heat was applied over 205 min up to 90°C, followed by vacuum distillation which yielded 4.36g (22.6%) Et₃SiCH₂CH₂CH₂Cl, with a Et₃SiCH₂CH₂CH₂Cl/Et₃SiCl ratio of 0.35. This example shows that very low levels of Cl₃SiH cause modest rate increases in the reaction between Et₃SiH and allyl chloride, but do not affect selectivity.

**TABLE IX**

| PROMOTION OF Et₃SiH AND ALLYL CHLORIDE | | | | | |
|---|---|---|---|---|---|
| Example | REACTANT A | OLEFIN | PROMOTER | YIELD % | TIME |
| Comp.DD | Et₃SiH | CH₂=CHCH₂Cl | -- | 15.5 | 1000 min |
| Comp.EE | Et₃SiH | CH₂=CHCH₂Cl | EqM. Cl₃SiH* | 4.2 | 110 min |
| Comp.FF | Et₃SiH | CH₂=CHCH₂Cl | EqM. Cl₃SiH | 16.5 | 45 min |
| 23 | Et₃SiH | CH₂=CHCH₂Cl | EqM. Cl₃SiH | 32.7 | 132 min |
| 24 | Et₃SiH | CH₂=CHCH₂Cl | 10/1 Olefin/Cl₃SiH | 63.0 | 20 min |
| 25 | Et₃SiH | CH₂=CHCH₂Cl | 13mol.% Cl₃SiH | 40.9 | 170 min |
| 26 | Et₃SiH | CH₂=CHCH₂Cl | 10 mol.% Cl₃SiH | 40.5 | 46 min |
| 27 | Et₃SiH | CH₂=CHCH₂Cl | 0.1 ml Cl₃Si/H₂PtCl₆** | 22.6 | 205 min |

| | | | | | |
|---|---|---|---|---|---|
| * Compare to Example 8 where, though only difference is in the olefin, the yield was 82.5%. | | | | | |
| ** When 0.1 ml(i.e. very small quantity of Cl₃SiH) of catalyst solution of Example 16 is used, modest increases are found again indicating the difference when only the olefin is charged. | | | | | |

Table IX again illustrates a number of interesting observations. First, in comparing Examples FF and 23 to Example EE, the only difference is in the order the reactants are combined. Adding the olefin to a mixture of Et₃SiH and Cl₃SiH promoter later rather than at the start increased the yield to 16.5% while, when Et₃SiH and Cl₃SiH were precombined and added to the olefin later, the yield rose to 32.7%.

Similarly, the order of combination effects lower yields in Examples 25 and 26 compared to Example 24. In Example 24, the olefin and Cl₃SiH are given a chance to precombine before being added to Et₃SiH. By contrast, both the Cl₃SiH and Et₃SiH are precombined in Examples 25 and 26 whether they are added to the olefin (Example 26) or the olefin is later added to them (Example 25).

Finally, comparing Examples EE and 27 to Example 8 in Table III, it can be observed once more that yields may be greatly affected merely by changing the olefin of the reaction.

### Comparative Example GG

Reaction of Me₂SiHCl with allyl chloride.

In a 100 ml apparatus, there were combined 18.9g (0.2 mol) of Me₂SiHCl, 15.3g (0.2 mol) of allyl chloride, and 0.05 ml Pt catalyst solution at 18.5°C, followed by heating at reflux for 50 hr. An equivalent quantity of Pt catalyst solution was added during the reflux period. Vacuum distillation of the incomplete reaction yielded 12.6% of Me₂SiClCH₂CH₂CH₂Cl. This example shows that the unpromoted reaction of Me₂SiHCl with allyl chloride proceeds very slowly at reflux temperature.

### Example 28

Reaction of equimolar mixture of Et₃SiH/Me₂SiHCl with allyl chloride.

In a 100 ml apparatus, there were combined 7.1g (0.075 mol) of Me₂SiHCl, 8.7g (0.075 mol) of Et₃SiH and 5.7g (0.075 mol) of allyl chloride. Pt catalyst solution was added (0.05 ml) at 34°C. Gentle heating caused a smooth exothermic reaction to 92° over 36 min. Vacuum distillation yielded 42.5% of Me₂SiClCH₂CH₂CH₂Cl and 4.8% of Et₃SiCH₂CH₂CH₂Cl. This example shows that Et₃SiH at the equimolar level is an effective promoter for the reaction between Me₂SiHCl and allyl chloride.

### Example 29

Reaction of equimolar mixture of Et₃SiH/MeSiHCl₂ with allyl chloride.

In a 100 ml apparatus, there were combined 11.6g (0.1 mol) of Et₃SiH, 11.5g (0.1 mol) of MeSiHCl₂, and 7.7g (0.1 mol) of allyl chloride. Pt catalyst solution (0.05 ml) was added at 21°C, gentle heating caused an exothermic reaction to 88°C over 150 min. Vacuum distillation yielded 40.4% of MeSiCl₂CH₂CH₂CH₂Cl and 13.0% of Et₃SiCH₂CH₂CH₂CH₂Cl. This example shows that both MeSiHCl₂ and Et₃SiH are promoters at the equimolar level for reactions of the other with allyl chloride. The promotion effects are milder than those between Et₃SiH and Cl₃SiH as shown in Comparative Example FF. The unpromoted reaction between MeSiHCl₂ and allyl chloride is known to be slow at reflux.

### Comparative Example HH

Reaction of equimolar mixture of Cl₃SiH/MeSiHCl₂ with allyl chloride.

In a 50 ml apparatus, there were combined 13.1g (0.097 mol) of Cl₃SiH, 11.1g (0.097 mol) of MeSiHCl₂, and 7.4g (0.097 mol) of allyl chloride. Pt catalyst solution (0.05 ml) was added at 21.5°C, causing a smooth exothermic reaction to 55°C over 42 min, followed by heating at reflux (up to 67°C) over 330 min. Vacuum distillation yielded 12.14g of a mixture of Cl₃SiCH₂CH₂CH₂Cl/MeSiCl₂CH₂CH₂CH₂Cl in a 2.04/1 ratio. This example shows that neither Cl₃SiH nor MeSiHCl₂ is a very effective promoter at the equimolar level for reactions of the other with allyl chloride.

### Comparative Example II

Reaction of equimolar mixture of Cl₃SiH/Me₂SiHCl with allyl chloride.

In a 100 ml apparatus, there were combined 7.1g (0.075 mol) of Me₂SiHCl, 10.2g (0.075 mol) of Cl₃SiH, and 5.7g (0.075 mol) of allyl chloride. Pt catalyst solution(0.01 ml) was added at 33°C, causing an exothermic reaction to 47°C in 7 min. VPC analysis 14 min. later showed a complete reaction. Vacuum distillation yielded 60.4% Cl₃SiCH₂CH₂CH₂Cl and 8.6% Me₂SiClCH₂CH₂CH₂Cl. This example shows that Me₂SiHCl is an effective promoter for the reaction of Cl₃SiH with allyl chloride at the equimolar level.

### Example 30

Reaction of equimolar mixture of MeSiHCl₂/Me₂SiHCl with allyl chloride.

In a 100 ml apparatus, there were combined 8.6g (0.075 mol) of MeSiHCl₂, 7.1g (0.075 mol) of Me₂SiHCl, and 5.7g (0.075 mol) of allyl chloride. Pt catalyst solution (0.01 ml) was added at 37°C, followed by heating up to 45°C over 1 h. Vacuum distillation yielded 31.3% of MeSiCl₂CH₂CH₂CH₂Cl and 22.6% of Me₂SiClCH₂CH₂CH₂Cl. This example shows that neither Me₂SiHCl nor MeSiHCl₂ is a very effective promoter at the equimolar level for reactions of the other with allyl chloride.

**TABLE X**

| PROMOTION OF Me₂SiHCl AND ALLYL CHLORIDE | | | | | |
|---|---|---|---|---|---|
| Example | REACTANT A | OLEFIN | PROMOTER | YIELD % | TIME |
| Comp. GG | Me₂SiHCl | CH₂=CHCH₂Cl | -- | 12.6 | 3000 min |
| 28 | Me₂SiHCl | CH₂=CHCH₂Cl | EqM. Et₃SiH* | 42.5* | 36 min |
| Comp. II | Me₂SiHCl | CH₂=CHCH₂Cl | EqM. Cl₃SiH | 8.6 | 7 min |
| 30 | Me₂SiHCl | CH₂=CHCH₂Cl | Eqm. Me₂SiHCl₂ | 22.6 | > 60 min |

| | | | | | |
|---|---|---|---|---|---|
| * Compare to Comparative Example M. Here the production from the corresponding olefin was 81.1%. | | | | | |

This Table shows again how varying the olefin and reactant also changes the yields. For example, the same quantity of Et₃SiH and Me₂SiHCl(Comparative Example M versus Example 28) promotes 81.1% yield with methallyl chloride and only 42.5% yield with allyl chloride.

### Comparative Example JJ

Reaction of Cl₃SiH with allyl chloride, former added to latter.

In a 50 ml apparatus, there were combined 7.7g (0.1 mol) of allyl chloride and 0.05 ml Pt catalyst solution. The mixture was heated to reflux (43°C) and the addition of 13.6g (0.1 mol) of Cl₃SiH begun. Addition was complete in 33 min, during which the reflux temp. had increased to 47°C. After another 16 min, reflux temp. was 70°C and reaction was complete. Vacuum distillation yielded 14.01g (66.1%) of Cl₃SiCH₂CH₂CH₂Cl. This example shows that the reaction between Cl₃SiH and allyl chloride, which is slow at the reflux temperature of the combined reactants, can be accelerated by beginning at the higher reflux temperature of the allyl chloride.

### Comparative Example KK

Reaction of Cl₃SiH with allyl chloride promoted by Cl₃GeH.

The reaction of Comparative Example JJ was repeated except that all reactants and catalyst were combined at the start and 0.18g of Cl₃GeH added at once (instead of Et₃SiH). VPC analysis showed no promotion of the reaction between Cl₃SiH and allyl chloride even after heating at reflux for 3 h. Cl₃GeH is not an effective promoter for the reaction between Cl₃SiH and allyl chloride under these conditions.

### Example 31

Reaction of 10/1 molar mixture of Cl₃SiH/Et₃SiH with allyl chloride, former added to latter.

In a 50 ml apparatus, there were combined 7.7g (0.1 mol) of allyl chloride and 0.05 ml of Pt catalyst solution. At 42°C, addition of a mixture of 13.6g (0.1 mol) of Cl₃SiH and 1.2g (0.01 mol) of Et₃SiH was begun. There was an exothermic reaction during addition (27 min) to 77°C. Vacuum distillation yielded 13.98g (65.9%) of Cl₃SiCH₂CH₂CH₂Cl. This example shows that Et₃SiH is an effective promoter for the reaction between Cl₃SiH and allyl chloride, increasing the reaction rate, but not the yield or selectivity.

### Example 32

Reaction of 15/1 molar mixture of Cl₃SiH/Et₃SiH with allyl chloride, latter added to former.

In a 50 ml apparatus, there were combined 12.0g (0.09 mol) of Cl₃SiH, 0.7g (0.006 mol) of Et₃SiH, and 0.04 ml of Pt catalyst solution. The addition of 6.8g (0.09 mol) of allyl chloride was begun at 24°C causing an exothermic reaction to 63°C during addition (18 min). Vacuum distillation yielded 11.92g (63.2%) of Cl₃SiCH₂CH₂CH₂Cl, showing that Et₃SiH promotes the reaction between Cl₃SiH and allyl chloride at lower temperatures than phenothiazine, such that no external heating is required. This example also shows that the reactant combination sequence has little effect effect on yield or selectivity of the reaction between Cl₃SiH and allyl chloride.

### Example 33

Reaction between Cl₃SiH and allyl chloride promoted by Et₃SiH.

To a mixture of 13.6g (0.1 mol) of Cl₃SiH and 0.05 ml Pt catalyst solution in a 50 ml apparatus, there was added dropwise 7.7g (0.1 mol) of allyl chloride at 24°C. VPC analysis 1 hr. after start of addition (30 min. after completion of addition) showed less than 1% conversion of reactants to products. Et₃SiH (0.04 ml) was added, causing a smooth exothermic reaction to 67°C in 24 min. Vacuum distillation yielded 14.29g (67.4%) of Cl₃SiCH₂CH₂CH₂Cl. This example shows that the reaction between Cl₃SiH and allyl chloride is promoted very effectively in rate by very low levels (0.33 mol.%) of Et₃SiH, with the elimination of external heating.

**TABLE XI**

| PROMOTION OF Cl₃SiH AND ALLYL CHLORIDE | | | | | |
|---|---|---|---|---|---|
| Example | REACTANT A | OLEFIN | PROMOTER | YIELD % | TIME |
| Comp.JJ | Cl₃SiH | CH₂=CHCH₂Cl | -- | 66.1 | 49 min |
| Comp.KK | Cl₃SiH | CH₂=CHCH₂Cl | Cl₃GeH | No Promotion | 7180 min |
| 31 | Cl₃SiH | CH₂=CHCH₂Cl | 10/1 Cl₃SiH/Et₃SiH | 65.9* | 27 min |
| 32 | Cl₃SiH | CH₂=CHCH₂Cl | 15/1 Cl₃SiH/Et₃SiH | 63.2** | 18 min |
| 33 | CH₃SiH | CH₂=CHCH₂Cl | 0.33 mol.% Et₃SiH | 67.4*** | 24 min |

| | | | | | |
|---|---|---|---|---|---|
| * With Et₃SiH acting as promoter (similar to Example 26 but the ratio of Cl₃SiH and Et₃SiH is reversed), rate is increased but yield is not increased; here the mixture is added to olefin. | | | | | |
| ** Here, the order of reaction was reversed (olefin added to mixture) with again higher rates but no effect on yield. | | | | | |

This Table XI shows that Cl₃SiH and allyl chloride can be promoted primarily in their rate by both Et₃SiH and EtMe₂SiH and slightly in yield by EtMe₂SiH. Very small quantities of Et₃SiH may be used to promote rate (Example 33), and the order of mixing does not seem to matter (Contrast to Comparative Examples EE and FF and Examples 23-26 as discussed in Table IX.)

### Comparative Example OO

Reaction of Et₃SiH with 3-chloro-1-butene.

In a 50 ml apparatus, there were combined 4.5g (0.039 mol) of Et₃SiH and 3.5g (0.039 mol) of 3-chloro-1-butene. Pt catalyst solution (0.01 ml) was added at 22°C, followed by heating up to 77°C over 70 min. Vacuum distillation yielded 3.46g (58.9%) of Et₃SiCl and 0.61g (7.6%) of Et₃SiCH₂CH₂CHMeCl. This example demonstrates the low yield of Et₃SiCH₂CH₂CHMeCl from the unpromoted reaction of Et₃SiH with 3-chloro-1-butene.

### Example 34

Reaction of Et₃SiH with 3-chloro-1-butene promoted by Cl₃SiH.

The reaction of Comparative Example OO was repeated except that 1.0g (0.007 mol) of Cl₃SiH was also added. There was a smooth exothermic reaction to 55°C in 52 min with no external heating. Vacuum distillation yielded 2.54g (22.5%) of Et₃SiCl and 11.40g (73.6%) of Et₃SiCH₂CH₂CHMeCl. This example shows that Cl₃SiH is a very effective promoter for the reaction between Et₃SiH and 3-chloro-1-butene, increasing both rate and yield, and eliminating external heating.

### Comparative Example PP

Reaction of Et₃SiH with 4-methyl-1-pentene.

In a 50 ml apparatus, there were combined 6.3g (0.075 mol) of 4-methyl-1-pentene, 8.7g (0.075 mol) of Et₃SiH, and 0.01 ml of Pt catalyst solution at 22°C. Heat was applied over 2 h up to 58°C, with VPC analysis showing 11.0% conversion of reactants to Et₃SiCH₂CH₂CH₂CHMe₂. This example demonstrates the low rate of the unpromoted reaction between Et₃SiH and 4-methyl-1-pentene.

### Example 35

Reaction of Et₃SiH with 4-methyl-1-pentene promoted by Cl₃SiH.

The reaction of Comparative Example PP was repeated except that Cl₃SiH (1.0g, 0.0075 mol) was also added. There was a rapid exothermic reaction from 23°C to 70°C in 8 min. VPC analysis at that point showed 29.7% conversion of reactants to Et₃SiCH₂CH₂CH₂CHMe₂, demonstrating that Cl₃SiH is an effective promoter for the reaction of Et₃SiH with 4-methyl-1-pentene.

### Comparative Example QQ

Reaction of equimolar mixture of Et₃SiH,/MeSiHCl₂ with 4-methyl-1-pentene.

In a 50 ml apparatus, there were combined 8.1g (0.07 mol) of Et₃SiH, 8.1g (0.07 mol) of MeSiHCl₂, and 5.9g (0.07 mol) of 4-methyl-1-pentene. Pt catalyst solution (0.05 ml) was added at 21°C. Gentle heating caused and exothermic reaction to 55°C in 38 min. VPC analysis of the complete reaction 90 min later showed a mixture of MeSiCl₂CH₂CH₂CH₂CHMe₂/Et₃SiCH₂CH₂CH₂CHMe₂ in a molar ratio of 3.3/1. This example shows that neither MeSiHCl₂ nor Et₃SiH is a very effective promoter at the equimolar level for reactions of the other with 4-methyl-1-pentene.

### Comparative Example RR

Reaction of equimolar mixture of EtMe₂SiH/MeSiHCl₂ with 4-methyl-1-pentene.

In a 25 ml apparatus, there were combined 2.6g (0.023 mol) of MeSiHCl₂, 2.0g (0.023 mol) of EtMe₂SiH, and 1.9g (0.023 mol) of 4-methyl-1-pentene. A few droplets of Pt catalyst solution were added at 22°C. Gentle heating caused an exothermic reaction to 53°C over 21 min followed by heating at 50°C for 130 min. VPC analysis of the complete reaction showed equivalent yields of MeSiCl₂CH₂CH₂CH₂CHMe₂ and EtMe₂SiCH₂CH₂CH₂CHMe₂. This example shows that while the promoting effect of EtMe₂SiH is nearly equivalent to that of Et₃SiH for the reaction of MeSiHCl₂ with 4-methyl-1-pentene, its competitive reactivity is significantly higher.

### Comparative Example SS and Example 36

Reaction with Et₃SiH with 3,3-dimethyl-1-butene promoted by Cl₃SiH.

In a 50 ml apparatus, there were combined 11.6g (0.1 mol) of Et₃SiH, 8.4g (0.01 mol) of 3,3-dimethyl-1-butene, and 0.01 ml Pt catalyst solution at 14°C. Heat was applied up to 86.5°C over 113 min, when VPC analysis showed 38.4% conversion of reactants to Et₃SiCH₂CH₂CMe₃. Reaction was cooled to 60°C and 0.7g (5 mol-%) of Cl₃SiH added, causing a rapid exothermic reaction to 83°C in 3 min, and complete conversion of reactants to Et₃SiCH₂CH₂CMe₃. This example demonstrates both the low rate of the unpromoted reaction and the effectiveness of Cl₃SiH as a promoter for the reaction between Et₃SiH and 3,3-dimethyl-1-butene.

### Example 37

Reaction of equimolar mixture of Cl₃SiH/Et₃SiH with 3,3-dimethyl-1-butene.

In a 100 ml apparatus, there were combined 11.6g (0.1 mol) of Et₃SiH, 8.4g (0.1 mol) of 3,3-dimethyl-1-butene, and 13.6g (0.1 mol) of Cl₃SiH. Pt Catalyst solution was added (0.05 ml) at 24°C, causing a rapid exothermic reaction to 57°C in 4 min. Vacuum distillation yielded 1.82g (8.3%) of Cl₃SiCH₂CH₂CMe₃ and 11.95g (59.8%) of Et₃SiCH₂CH₂CMe₃. This example shows that Cl₃SiH is an effective promoter at the equimolar level for the reaction between Et₃SiH and 3,3-dimethyl-1-butene.

### Comparative Example TT

Reaction of Et₃SiH with allyl phenyl ether.

In a 50 ml apparatus, there were combined 10.1g (0.075 mol) of allyl phenyl ether and 8.7g (0.075 mol) of Et₃SiH. Pt catalyst solution (0.02 ml) was added at 22°C, followed by heating up to 55°C over 3 hrs. Vacuum stripping left 14.7g (78.4%) of Et₃SiCH₂CH₂CH₂OC₆H₅.

### Example 38

Reaction of Et₃SiH with allyl phenyl ether promoted by Cl₃SiH.

The reaction of Comparative Example TT was repeated except that 1.4g (0.01 mol) of Cl₃SiH was also added. Gentle heating caused a violent exothermic reaction from 40°C to 137°C over 18 min. Vacuum stripping left 19.7g (78.8%) of Et₃SiCH₂CH₂CH₂OC₆H₅. This example shows that Cl₃SiH is an effective promoter for the rate of the reaction between Et₃SiH and allyl phenyl ether.

### Comparative Example VV

Reaction of Et₃SiH with methallyl phenyl ether.

In a 50 ml apparatus, there were combined 5.8g (0.05 mol) of Et₃SiH, 7.4g (0.04 mol) of methallyl phenyl ether, and 0.02 ml of Pt catalyst solution at 21°C. Heat was applied to 86°C over 115 min. VPC analysis showed only 21.9% conversion of reactants to Et₃SiCH₂CHMeCH₂OC₆H₅. -

### Example 39

Reaction of Et₃SiH with methallyl phenyl ether promoted by Cl₃SiH.

The reaction of Comparative Example VV was repeated except that 0.7g (0.005 mol) of Cl₃SiH was also added. There was a rapid exothermic reaction from 23°C to 131°C in 90 sec. VPC showed 88.4% conversion of reactants to Et₃SiCH₂CHMeCH₂OC₆H₅, demonstrating that Cl₃SiH is a very effective promoter for the reaction of Et₃SiH with methallyl phenyl ether. Note that the allyl and methallyl phenyl ethers are chemical models for allyl and methallyl polyalkylene oxide ethers which are articles of commerce.

### Comparative Example WW

Reaction of Et₃SiH with styrene.

In a 50 ml apparatus, there were combined 8.6g (0.075 mol) of Et₃SiH, 7.8g (0.075 mol) of styrene, and 0.05 ml Pt catalyst solution at 20°C. There was a slow reaction to 29°C over 33 min (heat rise due to magnetic stirrer), with VPC analysis showing 1.8% conversion of reactants to Et₃SiCH₂CH₂C₆H₅.

### Example 40

Reaction of Et₃SiH with styrene promoted by Cl₃SiH.

The reaction of Comparative Example WW was repeated except that 1.0g (0.0075 mol) of Cl₃SiH was also added. There was an exothermic reaction to 39°C over 38 min, with 24.1% conversion of reactants to Et₃SiCHMeC₆H₅/Et₃SiCH₂CH₂C₆H₅ (0.59 molar ratio). This example shows that Cl₃SiH is an effective promoter for the reaction between Et₃SiH and styrene.

### Comparative Example XX

Reaction of D₃D' with vinyl acetate.

In a 100 ml apparatus, there were combined 30.5g (0.1 mol) of 92% D₃D' and 0.05 ml Pt catalyst solution. Heat was applied to 125°C and addition of 8.6g (0.1 mol) of vinyl acetate begun. Continued heating during addition caused an exothermic reaction to 195°C over 220 min. Vacuum distillation yielded 11.42g (31.0%) of D₃D'CHMeOAc and 4.62g (12.6%) of D₃D'CH₂CH₂OAc.

### Example 41

Reaction of D₃D' with vinyl acetate promoted by Cl₃SiH.

The reaction of Comparative Example XX was repeated except that all reactants were combined at the start and 1.4g (0.01 mol) of Cl₃SiH was also added. Heat was applied to a maximum temp. of 147°C over 360 min, followed by vacuum distillation, which yielded 5.46g (14.8%) of D₃D'CHMeOAc and 18.78g (51.0% ) of D₃D'CH₂CH₂OAc. This example shows that Cl₃SiH is an effective promoter for the reaction between D₃D' and vinyl acetate, allowing reaction completion at significantly lower temp. with a much higher yield of the more stable and useful D₃D'CH₂CH₂OAc isomer.

**TABLE XII**

| PROMOTION USING OTHER OLEFINS | | | | | |
|---|---|---|---|---|---|
| Example | REACTANT A | OLEFIN | PROMOTER | YIELD % | TIME |
| Comp.OO | Et₃SiH | 3-chloro-1-butene | -- | 7.6 | 70 min |
| 34 | Et₃SiH | 3-chloro-1-butene | 18 mol-% Cl₃SiH | 73.6 | 52 min |
| Comp.PP | Et₃SiH | 4-methyl-1-pentene | -- | 11.0 | 7120 min |
| 35 | Et₃SiH | 4-methyl-1-pentene | 10 mol-% Cl₃SiH | 29.7 | 8 min |
| Comp.SS | Et₃SiH | 3,3-dimethyl-1-butene | -- | 38.4 | 113 min |
| 36 | Et₃SiH | 3,3-dimethyl-1-butene | 5 mol-% Cl₃SiH | Comp.* | 3 min |
| 37 | Et₃SiH | 3,3-dimethyl-1-butene | Eqm. Cl₃SiH | 59.8 | 4 min |
| Comp.TT | Et₃SiH | allyl phenyl ether | -- | 78.4 | >180 min |
| 38 | Et₃SiH | allyl phenyl ether | 13 mol-% Cl₃SiH | 78.8** | 18 min |
| Comp.VV | Et₃SiH | methallyl phenylether | -- | 21.9 | 115 min |
| 39 | Et₃SiH | methallyl phenylether | 10 mol-% Cl₃SiH | 88.4 | 1 1/2 min |
| Comp.WW | Et₃SiH | Styrene | -- | 1.8 | 33 min |
| 40 | Et₃SiH | Styrene | 10 mol-% Cl₃SiH | 24.1 | 38 min |
| Comp.XX | D₃D' | Vinyl acetate | -- | 12.6 | 220 min |
| 41 | D₃D | Vinyl acetate | 10 mol-% Cl₃SiH | 51 | 360 min |

| | | | | | |
|---|---|---|---|---|---|
| * Run to Completion | | | | | |

This Table shows, except for the last 2 examples, the effect of Cl₃SiH used as a promoter in a reaction between Et₃SiH and various other olefins. In each case, this table shows clearly that small amounts (i.e., about 10 mol-%) of Cl₃SiH significantly increases either rate or yield of these reactions. The last two examples show the same effect in a reaction between D₃D' and vinyl acetate also promoted by Cl₃SiH.

### Example 42

A 250 cm³three-necked flask equipped with a 125 cm³ dropping addition funnel, magnetic stirrer, reflux condenser, thermometer, heating mantle, and nitrogen inlet was charged with 71.5 grams (0.638 moles) allyl acrylate, 0.150 grams phenothiazine inhibitor, 0.150 grams Diphenyl-p-phenylenediamine inhibitor and heated to 50°C with stirring. When 50°C was reached, 80 microliters of 10% chloroplatinic acid solution (20 ppm of platinum as based on total reaction charge) was injected into the flask followed by 100 µl of triethylsilane promoter. A feed of trichlorosilane was introduced slowly to the olefin with continuous stirring over a period of two hours. An exotherm was apparent immediately at the start of the addition. An ice bath was necessary to maintain the reaction mixture between 50-65°C throughout the addition. A total of 78.5 grams (0.580 moles) of trichlorosilane was added. Following the complete addition, the reaction mixture was cooled to room temperature and samples for gas chromatographic analysis. Results indicated approximately 70% product of 3-acryloxypropyltrichlorosilane. The identification was verified later by gc/mass spec analysis. Recovery was 145 grams of reaction material.

This example shows the promotional effects of a second silane when the olefin is allyl acrylate. This reaction is important because the generated catalyst allows the reaction to occur at 50°-65°C, thus preventing the polymerization associated with usage of unstable acrylates at higher temperatures. While some product would form without promotion, it is uncertain when reaction initiation would occur. Thus the effective yield increase is great compared to the unpromoted reaction.

## Claims

1. A process of preparing compounds containing silicon-carbon bonds by a hydrosilation reaction of (A) a hydrosilyl reactant with (B) an olefinic reactant and (C) a hydrosilyl promoter in the presence of a soluble platinum catalyst at a temperature below 150°C wherein:
(A) the hydrosilyl reactant has the formula:
R₃SiH
where R is selected from the group consisting of
(i) a monovalent hydrocarbon group which is an aliphatic group having 1 to 10 carbon atoms or an aromatic group having 6 to 20 carbon atoms free of terminal unsaturation, possibly substituted with halogen, cyano, carboalkoxy (ester), ether or thioether, with the proviso that when such hydrosilyl reactant is substituted with functional groups, said functional groups do not interfere with the promotion mechanism for hydrosilane-promoted hydrosilations;
(ii) an alkoxy group;
(iii) an acyloxy group;
(iv) a carbomyloxy group;
(v) a siloxy group;
(vi) a halogen or
(vii) two R groups taken together form a heterocyclic ring including the silicon atom;
(B) the olefinic reactant is used at 0.1 to 2.0 molar amounts relative to the hydrosilyl reactant (A); and
(C) the hydrosilyl promoter is selected from the group consisting of Cl₃SiH, MeSiHCl₂, Me₂SiHCl, Et₃SiH, F₃SiH and Br₃SiH, with the proviso that the hydrosilyl promoter and the hydrosilyl reactant may not be the same compound when used in the same reaction, the hydrosilyl promoter(C) is used at is 0.0001 to 0.1 molar amounts relative to the hydrosilyl reactant (A), and said promoter (C)
provides (l) at least a 20% increase in the amount of silicon-carbon compounds, or (2) at least a 20% increase in reaction rate relative to an unpromoted reaction of (A) and (B).

2. The process according to claim 1
wherein the hydrosilyl reactant has the general formula R₃SiH where R is halogen or siloxy.

3. The process of claim 1
wherein the hydrosilyl reactant has at leas two R groups to form a heterocyclic ring including the silicon of the formula 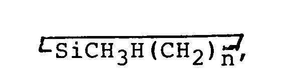 where n=3-6.

4. The process according to claim 1
where the promoter is Cl₃SiH and the hydrosilyl reactant is (CH₃CH₂)₃SiH.

5. The process according to claim 1
where the promoter is (CH₃CH₂)₃SiH and the hydrosilyl reactant is (CH₃O)₃SiH.

6. The process according to any one of claims 1 to 5
wherein the olefinic reactant has the general formula CH₂=C〈, and is preferably selected from allyl and methallyl compounds, vinyl compounds, terminal alkenes, including halides, ethers, esters and nitriles, with the proviso that when the olefinic reactant is substituted to functional groups, the functional groups do not interefere with the hydrosilation reaction, especially allyl or methallyl polyalkylene oxide ether or allyl acrylate.

7. The process according to any one of claims 1 to 6
wherein the reaction is run at sub-ambient temperatures.

8. The process according to any one of claims 1 to 7
wherein the soluble platinum catalyst is chosen from the group consisting of solutions of H₂PtCl₆, in hydrated or unhydrated form, solutions of PtCl₄ or PtCl₂ and solutions of ethylene-bis-(platinum chloride).

## Patentansprüche

1. Verfahren zur Herstellung von Silizium-Kohlenstoffbindungen enthaltenden Verbindungen durch eine Hydrosilierungsreaktion von (A) einem Hydrosilylgruppen enthaltenden Reaktanten mit (B) einem olefinischen Reaktanten und (C) einem Hydrosilylgruppen enthaltenden Aktivator in Gegenwart eines löslichen Platin-Katalysators, wobei
(A) der Hydrsilylgruppen enthaltende Reaktant die Formel
R₃SiH
hat, wobei R aus der aus
(i) einwertigen Kohlenwasserstoffgruppen welche aliphatische Gruppen mit 1 bis 10 Kohlenstoffatomen oder aromatische Gruppen mit 6 bis 20 Kohlenstoffatomen, die frei von endständigen ungesättigten Gruppen sind und durch Halogen Cyano-, Alkoxycarbonyl- (Ester) Ether- oder Thioethergruppen substituiert sein können, darstellen, mit der Maßgabe, daß, wenn ein solcher Hydosilylgruppen enthaltender Reaktant durch funktionelle Gruppen substituiert ist, diese funktionellen Gruppen den Aktivierungsmechanismus nicht stören,
(ii) Alkoxygruppen,
(iii) Acyloxygruppen,
(iv) Carbamoyloxygruppen,
(v) Silyloxygruppen,
(vi) Halogenatomen bestehenden Gruppe ausgewählt ist, wobei
(vii) zwei Gruppen R zusammengenommen einen heterocyclischen Ring bilden können, der das Siliziumatom einschließt,
(B) der olefinische Reaktant in einer Menge von 0,1 bis 2,0 Mol, bezogen auf den Hydrosilylgruppen enthaltenden Reaktanten, verwendet wird, und
(C) der Hydrosilygruppen enthaltende Aktivator aus der aus Cl₃SiH, MeSiHCl₂, Me₂SiHCl, Et₃SiH, F₃SiH und Br₃SiH bestehenden Gruppe ausgewählt ist, mit der Maßgabe, daß der Hydrosilylgruppen enthaltende Aktivator und der Hydrosilylgruppen enthaltende Reaktant, wenn sie in der gleichen Reaktion verwendet werden, nicht die gleiche Verbindung sein können, daß der Hydrosilylgruppen enthaltende Aktivator in Mengen von 0,0001 bis 0,1 Mol, bezogen auf den Hydrsilylgruppen enthaltenden Reaktanten, verwendet wird, und daß dieser Aktivator (C) gegenüber einer nicht aktivierten Reaktion von (A) mit (B) (1) eine Zunahme an Verbindungen mit Silizium-Kohlenstoffbindungen von mindestens 20% oder (2) eine Zunahme der Reaktionsgeschwindigkeit von mindestens 20% liefert.

2. Verfahren nach Anspruch 1, in welchem der Hydrosilylgruppen enthaltende Reaktant die Formel R₃SiH hat, worin R Halogen oder Silyloxy bedeutet.

3. Verfahren nach Anspruch 1, in welchem der Hydrosilyloxygruppen enthaltende Reaktant mindestens zwei Gruppen R aufweist, um einen heterocyclischen Ring der Formel 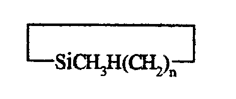 zu bilden, der das Siliziumatom einschließt, wobie n=3-6

4. Verfahren nach Anspruch 1, in welchem der Aktivator Cl₃SiH und der Hydrosilylgruppen enhaltende Reaktant (CH₃CH₂)₃SiH ist.

5. Verfahren nach Anspruch 1, in welchem der Aktivator (CH₃CH₂)₃SiH und der Hydrosilylgruppen enthaltende Reaktant (CH₃O)₃SiH ist.

6. Verfahren nach einem der Ansprüche 1 bis 5, in welchem der olefinische Reaktant die allgemeine Formel
CH₂=C〈
hat und ans Allyl- und Methallylverbindungen, Vinylverbindungen, Alkenen mit endständiger Doppelbindung einschließlich der Halogenide, Ether, Ester und Nitrile ausgewählt ist, mit der Maßgabe, daß, wenn der olefinische Reaktant an funktionellen Gruppen substituiert ist, die funktionellen Gruppen die Hydrosilierungsreaktion nicht stören, insbesondere Allyl- oder Methallylpolyalkylenoxidether oder Allylacrylat.

7. Verfahren nach einem der Ansprüche 1 bis 6, in welchem die Reaktion bei einer unter Umgebungstemperatur liegenden Temperatur durchgeführt wird.

8. Verfahren nach einem der Ansprüche 1 bis 7, in welchem der lösliche Platin-Katalysator aus der ans H₂PtCl₆ in hydratisierter oder unhydratisierter Form, Lösungen von PtCl₄ oder PtCl₂ und Lösungen von Ethylen-bis-(Platinchlorid) ausgewählt ist.

## Revendications

1. Procédé de production de composés contenant des liaisons silicium-à-carbone par une réaction d'hydrosilation (A) d'un corps réactionnel hydrosilylique avec (B) un corps réactionnel oléfinique et (C) un activateur hydrosilylique en présence d'un catalyseur soluble au platine à une température inférieure à 150°C, dans lequel :
(A) le corps réactionnel hydrosilylique répond à la formule :
R₃SiH
dans laquelle R est choisi dans l'ensemble constitué
(i) d'un groupe hydrocarboné monovalent qui est un groupe aliphatique ayant 1 à 10 atomes de carbone ou un groupe aromatique ayant 6 à 20 atomes de carbone sans non-saturation terminale, éventuellement substitué avec un halogène, un radical cyano, carbalkoxy (ester), éther ou thioéther, sous réserve que lorsque ce corps réactionnel hydrosilylique est substitué avec des groupes fonctionnels, lesdits groupes fonctionnels n'interfèrent pas avec le mécanisme d'activation des hydrosilations activées par un hydrosilane ;
(ii) un groupe alkoxy ;
(iii) un groupe acyloxy ;
(iv) un groupe carbamoyloxy ;
(v) un groupe siloxy ;
(vi) un halogène ou
(vii) deux groupes R s'associent pour former un noyau hétérocyclique comprenant l'atome de silicium ;
(B) le corps réactionnel oléfinique est utilisé en quantités de 0,1 à 2,0 moles par rapport au corps réactionnel hydrosilylique (A) ; et
(C) l'activateur hydrosilylique est choisi dans le groupe comprenant Cl₃SiH, MeSiHCl₂, Me₂SiHCl, Et₃SiH, F₃SiH et Br₃SiH, sous réserve que l'activateur hydrosilylique et le corps réactionnel hydrosilylique ne puissent pas représenter le même composé lorsqu'ils sont utilisés dans la même réaction, l'activateur hydrosilylique (C) est utilisé en quantité de 0,0001 à 0,1 mole par rapport au corps réactionnel hydrosilylique (A), et l'activateur (C)
permet (1) une augmentation d'au moins 20 % de la quantité de composés silicium-carbone ou (2) une augmentation d'au moins 20 % de la vitesse de réaction par rapport à une réaction non activée de (A) et (B).

2. Procédé suivant la revendication 1, dans lequel le corps réactionnel hydrosilylique répond à la formule générale R₃SiH dans laquelle R est un halogène ou un groupe siloxy.

3. Procédé suivant la revendication 1, dans lequel le corps réactionnel hydrosilylique porte au moins deux groupes R en formant un noyau hétérocyclique renfermant le silicium, de formule SiCH₃H(CH₂)ₙ, où n a une valeur de 3 à 6.

4. Procédé suivant la revendication 1, dans lequel l'activateur est Cl₃SiH et le corps réactionnel hydrosilylique est (CH₃CH₂)₃SiH.

5. Procédé suivant la revendication 1, dans lequel l'activateur est (CH₃CH₂)₃SiH et le corps réactionnel hydrosilylique est (CH₃O)₃SiH.

6. Procédé suivant l'une quelconque des revendications 1 à 5, dans lequel le corps réactionnel oléfinique répond à la formule générale CH₂=C〈, et est choisi de préférence parmi des composés allyliques et méthallyliques, des composés vinyliques, des alcènes terminaux, comprenant des halogénures, des éthers, des esters et des nitriles, sous réserve que lorsque le corps réactionnel oléfinique est lié par substitution à des groupes fonctionnels, les groupes fonctionnels n'interfèrent pas avec la réaction d'hydrosilation, notamment un éther allylique ou méthallylique de polyalkylène-oxyde ou l'acrylate d'allyle.

7. Procédé suivant l'une quelconque des revendications 1 à 6, dans lequel la réaction est conduite à des températures inférieures à la température ambiante.

8. Procédé suivant l'une quelconque des revendications 1 à 7, dans lequel le catalyseur soluble au platine es choisi dans le groupe comprenant des solutions de H₂PtCl₆, sous la forme hydratée ou non hydratée, des solutions de PtCl₄ ou PtCl₂ et des solutions d'éthylène-bis-(chlorure de platine).
